# EUROPEAN PATENT APPLICATION

(11) **EP 3 770 748 A1**
(43) Date of publication of application: **27.01.2021**
(21) Application number: 20186886.6
(22) Date of filing: 21.07.2020
(51) Int. Cl.: G06F 3/14, G06F 3/0488, H04N 7/15, G06F 3/041, G09G 5/12

(54) **COMMUNICATION TERMINAL, COMMUNICATION SYSTEM, DISPLAY CONTROL METHOD, AND CARRIER MEDIUM**

(30) Priority: 25.07.2019 JP 2019136864
(71) Applicant: Ricoh Company, Ltd., Tokyo 143-8555 (JP)
(72) Inventor: KAWASAKI, Yuichi, Tokyo, 143-8555 (JP); NAKAMURA, Shigeru, Tokyo, 143-8555 (JP); OGASAWARA, Masashi, Tokyo, 143-8555 (JP); HINOHARA, Hiroshi, Tokyo, 143-8555 (JP); MIYAMOTO, Atsushi, Tokyo, 143-8555 (JP); HOMMA, Takeshi, Tokyo, 143-8555 (JP); SUGIOKA, Tatsuroh, Tokyo, 143-8555 (JP)
(74) Representative: SSM Sandmair

(57) **Abstract**

A communication terminal (1b) shares data with another communication terminal (1a). The communication terminal includes: receiving means (11) for receiving display screen data from a communication management device (5), the display screen data being data of a display screen displayed on the another communication terminal; display control means (14) for controlling a display (180) to display a display screen based on the display screen data; storage means (1003) for storing operation information regarding an operation performed on an image included in the display screen; accepting means (12) for accepting an operation request for requesting a specific operation to be performed on the image; and determining means (21) for determining whether the specific operation can be performed. When the determining means determines that the specific operation cannot be performed on the image, the display control means controls the display to display a message indicating that the specific operation cannot be performed.

## Description

### BACKGROUND

### Technical Field

The present invention relates to a communication terminal, a communication system, a display control method, and a carrier medium.

### Description of the Related Art

Communication systems that allow communication between remote locations via a communication network such as the Internet are widely used. Examples of such communication systems include a conference system that implements a teleconference. In a common conference system, image data that is held in or displayed on a communication terminal used by a participant of a teleconference is transmitted to a communication terminal used by another participant via a communication network to share the image data (see JP-2011-254453-A). In this manner, the conference system allows a conference to be held between remote locations in a state close to an actual conference.

In addition, communication terminals such as electronic whiteboards are used in conferences or the like at companies, educational institutions, or government institutions. The communication terminals such as electronic whiteboards each display an image on a display and allow a user to draw a stroke image such as a character, numeral, or figure on this image (see JP-2015-70543-A). Specifically, a user moves the user's hand or electronic pen while keeping the hand or electronic pen in contact with the display to draw a character, numeral, figure, or the like. The communication terminal electronically converts the content drawn by the user to generate stroke data including coordinate data. The communication terminal renders the stroke data as the stroke image. In the case where the stroke image is rendered by one communication terminal, the communication terminal transmits the stroke data for reproducing this stroke image to another communication terminal via a communication network. Consequently, the same stroke image is displayed also on the other communication terminal.

Further, there is disclosed a method of undoing and redoing processes provided by a plurality of providers in an environment where processes are performed in response to a request of a requestor that implements a request from an end user (see JP-2009-259009-A).

For example, suppose that, in a system in which a display screen is shared among a plurality of communication terminals as described above, a stroke image input by a user of one of the communication terminals is deleted by a user of another communication terminal and then the user who has input the stroke image requests an undo operation. In this case, nothing occurs on the display screen with methods of the related art. This is because the stroke image which is an operation target is deleted by the other communication terminal. However, the cause of the phenomenon is unknown to the user who has requested the undo operation. Accordingly, there is room for improvement in the convenience of a user when a specific operation is performed on a display screen that is shared with another communication terminal for display.

### SUMMARY

To address the above-described issue, in one aspect of the present invention, a communication terminal is configured to share data with another communication terminal. The communication terminal includes: receiving means for receiving display screen data from a communication management device, the communication management device being configured to manage the data shared between the communication terminal and the another communication terminal, the display screen data being data of a display screen displayed on the another communication terminal; display control means for controlling a display to display a display screen based on the received display screen data; storage means for storing operation information regarding an operation performed on an image included in the display screen displayed on the display; accepting means for accepting an operation request for requesting a specific operation to be performed on the image; and determining means for determining whether the specific operation indicated by the operation request can be performed, based on the stored operation information. When the determining means determines that the specific operation cannot be performed on the image, the display control means controls the display to display a message indicating that the specific operation cannot be performed.

According to one aspect of the present invention, the convenience of a user can be improved when a specific operation is performed on a display screen that is shared with another communication terminal for display.

### BRIEF DESCRIPTION OF THE SEVERAL VIEWS OF THE DRAWINGS

A more complete appreciation of the invention and many of the attendant advantages and features thereof can be readily obtained and understood from the following detailed description with reference to the accompanying drawings, wherein:
FIG. 1 is a schematic view of an example of communication routes in a communication system, according to an embodiment of the present invention;
FIG. 2 is an illustration of a use scenario of an electronic whiteboard, according to an embodiment of the present invention;
FIG. 3 is a block diagram illustrating an example of a hardware configuration of the electronic whiteboard, according to an embodiment of the present invention;
FIG. 4 is a block diagram illustrating an example of hardware configurations of a communication management device, a relay device, and an image storage device, according to an embodiment of the present invention;
FIG. 5 is a diagram illustrating an example of a system configuration of the communication system, according to an embodiment of the present invention;
FIG. 6 is a block diagram illustrating an example of a functional configuration of the communication system, according to an embodiment of the present invention;
FIG. 7 is a diagram for schematically describing an example of drawing screen information, according to an embodiment of the present invention;
FIG. 8 is a diagram for schematically describing an example of an operation information management database (DB), according to an embodiment of the present invention;
FIG. 9 is a diagram for schematically describing an example of operation information, according to an embodiment of the present invention;
FIG. 10A is an illustration of an example of an authentication management table, according to an embodiment of the present invention;
FIG. 10B is an illustration of an example of a terminal management table, according to an embodiment of the present invention;
FIG. 11A is an illustration of an example of a candidate list management table, according to an embodiment of the present invention;
FIG. 11B is an illustration of an example of a session management table, according to an embodiment of the present invention;
FIG. 11C is an illustration of an example of a relay device management table, according to an embodiment of the present invention;
FIG. 12 is an illustration of an example of a drawing screen information management table, according to an embodiment of the present invention;
FIG. 13 is a sequence diagram illustrating an example of a preparation process for starting remote communication between electronic whiteboards, according to an embodiment of the present invention;
FIG. 14 is an illustration of an example of a candidate list screen displayed on the electronic whiteboard, according to an embodiment of the present invention;
FIG. 15 is a sequence diagram illustrating an example of a process of starting remote communication, according to an embodiment of the present invention;
FIG. 16 is a sequence diagram illustrating an example of a process of sharing stroke data, according to an embodiment of the present invention;
FIG. 17 is a flowchart illustrating an example of a process of performing an undo process or redo process for an operation that has been performed on a drawing screen in the electronic whiteboard, according to an embodiment of the present invention;
FIG. 18 is an illustration of an example of a drawing screen displayed on the electronic whiteboard, according to an embodiment of the present invention;
FIG. 19A is an illustration of an example of a drawing screen displayed after an undo process is performed in the electronic whiteboard, according to an embodiment of the present invention;
FIG. 19B is a diagram for schematically describing the state of the operation information management DB after the undo process is performed in the electronic whiteboard, according to an embodiment of the present invention;
FIG. 20A is an illustration of an example of a drawing screen displayed after a redo process is performed in the electronic whiteboard, according to an embodiment of the present invention;
FIG. 20B is a diagram for schematically describing the state of the operation information management DB after the redo process is performed in the electronic whiteboard, according to an embodiment of the present invention;
FIG. 21 is a sequence diagram illustrating an example of a process of displaying a drawing screen when operations conflict between a plurality of electronic whiteboards in the communication system, according to an embodiment of the present invention;
FIG. 22 is an illustration of an example of a drawing screen after an operation is performed in the electronic whiteboard, according to an embodiment of the present invention;
FIG. 23 is a flowchart illustrating an example of a process of determining whether an operation can be performed on the drawing screen in the electronic whiteboard, according to an embodiment of the present invention; and
FIG. 24 is an illustration of an example of an operation denial image displayed on the electronic whiteboard, according to an embodiment of the present invention.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Embodiments of the present invention are described below with reference to the drawings. In the description of the drawings, the same elements are denoted by the same reference numerals, and redundant description is omitted.

### Overview of Communication System

### Communication Routes

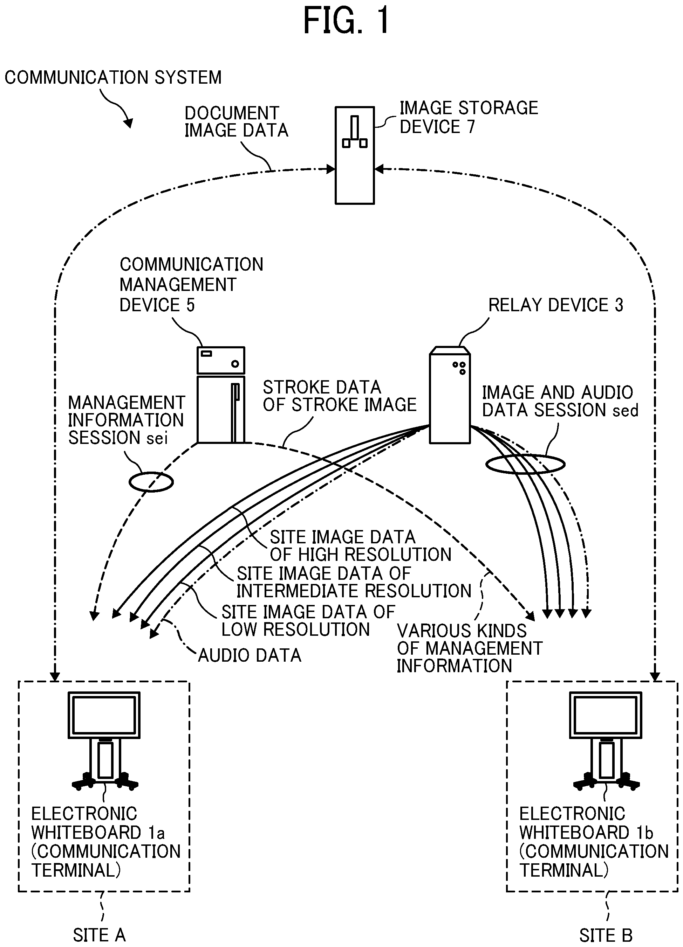

A communication system used for holding a videoconference between a plurality of electronic whiteboards 1a and 1b while drawing images is described first with reference to FIG. 1. FIG. 1 is a schematic view of an example of communication routes in a communication system according to an embodiment. Note that the term "teleconference", "remote conference" or the like is used interchangeably with the term "videoconference". A conference held as a "videoconference" or "teleconference" is an example of a session in which image data and stroke data are shared among a plurality of terminals. For example, the session in which image data and stroke data are shared may be a non-conference session in which a remote lecture, a remote medical examination, a meeting, a casual conversation, or the like is performed. In addition, the session in which image data and stroke data are shared may be used to present information in a single direction.

The communication system includes a plurality of electronic whiteboards including the electronic whiteboards 1a and 1b, a relay device 3, a communication management device 5, and an image storage device 7. The electronic whiteboards 1a and 1b perform mutual communication of content data including image data and audio data for a call and image data and stroke data for sharing. The stroke data is used for reproducing a stroke image and includes coordinate data, line width data, line color data, and vector data. The stroke data is transmitted and received as a serialized character string by the electronic whiteboards 1a and 1b. The electronic whiteboards 1a and 1b transmit and receive image data and audio data for a call to and from each other and reproduce an image and sound of a site where the communication counterpart resides. In this manner, the electronic whiteboards 1a and 1b implement a remote call.

The electronic whiteboards 1a and 1b transmit and receive image data of a document image for sharing to and from each other to allow participants who use the communication system to share the same document image. The document image is an image displayed on the displays of the electronic whiteboards 1a and 1b. For example, the document image is an image of a document for use in the conference, a background image displayed on the display, or the like. Image data of the document image is transmitted and received in a file format of Joint Photographic Experts Group (JPEG) or the like, for example. The electronic whiteboards 1a and 1b also transmit and receive stroke data of a stroke image for sharing to and from each other to allow participants who use the communication system to share the same stroke image. The stroke image is a line or the like drawn by a user as a handwritten stroke with an electronic pen or the like. The stroke image is displayed based on stroke data indicating points that identify coordinates on the display.

In the example of FIG. 1, the communication system includes the two electronic whiteboards, i.e., the electronic whiteboards 1a and 1b. In another example, the communication system may include three or more electronic whiteboards. The electronic whiteboards 1a and 1b are collectively referred to as an "electronic whiteboard 1" or "electronic whiteboards 1" hereinafter. The electronic whiteboard 1 is an example of a communication terminal having functions such as a communication function, a drawing function, and a display function. The communication terminal may be, for example, a personal computer (PC), smartphone, tablet terminal, smartwatch, car navigation terminal, videogame console, or telepresence robot installed with an application program for the communication system. The communication terminal may also be a medical device. In a case where the communication terminal is a medical device, the document image may be an image of a patient.

FIG. 1 illustrates the electronic whiteboards 1a and 1b as an example of electronic whiteboards having a videoconference function. A site image based on site image data can be either a moving image or a still image.

An electronic whiteboard serving as a request sender terminal that sends a request for starting a videoconference is referred to as a "starting terminal", and an electronic whiteboard serving as a destination (relay destination) to which the request is to be sent is referred to as a "counterpart terminal". In FIG. 1, the electronic whiteboard 1a serves as the starting terminal, and the electronic whiteboard 1b serves as the counterpart terminal. When the electronic whiteboard 1b sends a request for starting a videoconference, the electronic whiteboard 1b serves as the starting terminal and the electronic whiteboard 1a serves as the counterpart terminal. Note that the electronic whiteboards 1a and 1b may be used for communication within the same room and for outdoor-indoor communication or outdoor-outdoor communication as well as for communication between different offices and for communication between different rooms in the same office.

The relay device 3 is implemented by one or more computers. The relay device 3 performs a process of relaying content data for a call between a plurality of electronic whiteboards such as the electronic whiteboards 1a and 1b.

The communication management device 5 is implemented by one or more computers. The communication management device 5 centrally controls authentication for login requested from the electronic whiteboards 1a and 1b and centrally manages the communication statuses of the electronic whiteboards 1a and 1b, a candidate list, and the communication status of the relay device 3, for example. The communication management device 5 also relays stroke data for sharing between a plurality of electronic whiteboards such as the electronic whiteboards 1a and 1b.

The image storage device 7 is implemented by one or more computers. The image storage device 7 stores image data of a document image for sharing. The image data is uploaded from the electronic whiteboard 1a and is downloaded to the electronic whiteboard 1b, for example. The reverse is also performed. That is, the image storage device 7 stores image data that is uploaded from the electronic whiteboard 1b and that is downloaded to the electronic whiteboard 1a.

In one example, each of the relay device 3, the communication management device 5, and the image storage device 7 may be implemented by a single computer. In another example, each of the relay device 3, the communication management device 5, and the image storage device 7 may be implemented by a plurality of computers to which one or more units (functions or means) are allocated in any manner. In this example, the communication management device 5 and the image storage device 7 constitute a server system 6 that manages data to be shared between a plurality of electronic whiteboards such as the electronic whiteboards 1a and 1b. In one example, the server system 6 may be implemented by a single computer including the units (functions or means) of the communication management device 5 and the image storage device 7. The image storage device 7 may relay, in place of the communication management device 5, stroke data for sharing between a plurality of electronic whiteboards such as the electronic whiteboards 1a and 1b.

In the communication system, a management information session sei for transmitting and receiving various kinds of management information is established between the electronic whiteboards 1a and 1b through the communication management device 5. In addition, four sessions are established between the electronic whiteboard 1a and the electronic whiteboard 1b through the relay device 3 to transmit and receive four kinds of data including site image data of high resolution, site image data of intermediate resolution, site image data of low resolution, and audio data. In FIG. 1, these four sessions are collectively referred to as an image and audio data session sed. Note that the image and audio data session sed does not necessarily include four sessions and may include a number of sessions that is less than or more than four sessions. In addition, a communication session may be established directly between the starting terminal and the counterpart terminal without using the relay device 3 therebetween. In the communication system, the communication management device 5 may have the function of the relay device 3, and the image and audio data session sed may be established between the electronic whiteboard 1a and the electronic whiteboard 1b through the communication management device 5.

In the communication system, stroke data can be transmitted and received to and from the electronic whiteboard 1a and the electronic whiteboard 1b using the management information session sei.

The description is now given of the resolution of an image based on the site image data handled in the present embodiment. The site image data of low resolution is constituted by, for example, 160 pixels in the horizontal direction and 120 pixels in the vertical direction and serves as a base image. The site image data of intermediate resolution is constituted by, for example, 320 pixels in the horizontal direction and 240 pixels in the vertical direction. The site image data of high resolution is constituted by, for example, 640 pixels in the horizontal direction and 480 pixels in the vertical direction. In the case of a narrow band path, low-quality image data that includes the site image data of low resolution serving as the base image alone is relayed. In the case of a relatively wide band path, intermediate-quality image data including the site image data of low resolution serving as the base image and the site image data of intermediate resolution is relayed. In the case of a very wide band path, high-quality image data including the site image data of low resolution serving as the base image, the site image data of intermediate resolution, and the site image data of high resolution is relayed. Since audio data contains a smaller amount of data than the site image data, the audio data is relayed even in the narrow band path.

### Use Scenario of Electronic Whiteboard

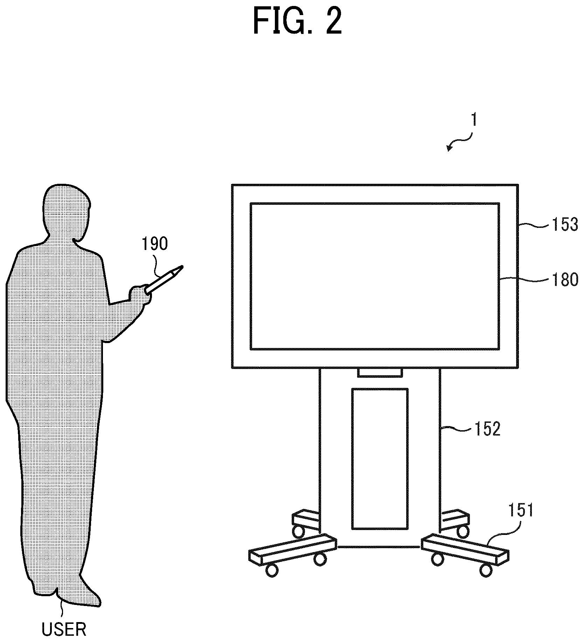

FIG. 2 is an illustration of a use scenario of an electronic whiteboard according to the embodiment. As illustrated in FIG. 2, the electronic whiteboard 1 includes a plurality of legs 151 each having a caster thereunder, a support 152 provided on the legs 151, a main body 153 provided on the support 152, and a display 180 provided on the front surface of the main body 153. The main body 153 includes a central processing unit (CPU) 101 and other components which are described later. The user can input (draw) a stroke image such as a character on the display 180 using an electronic pen 190.

### Hardware Configurations

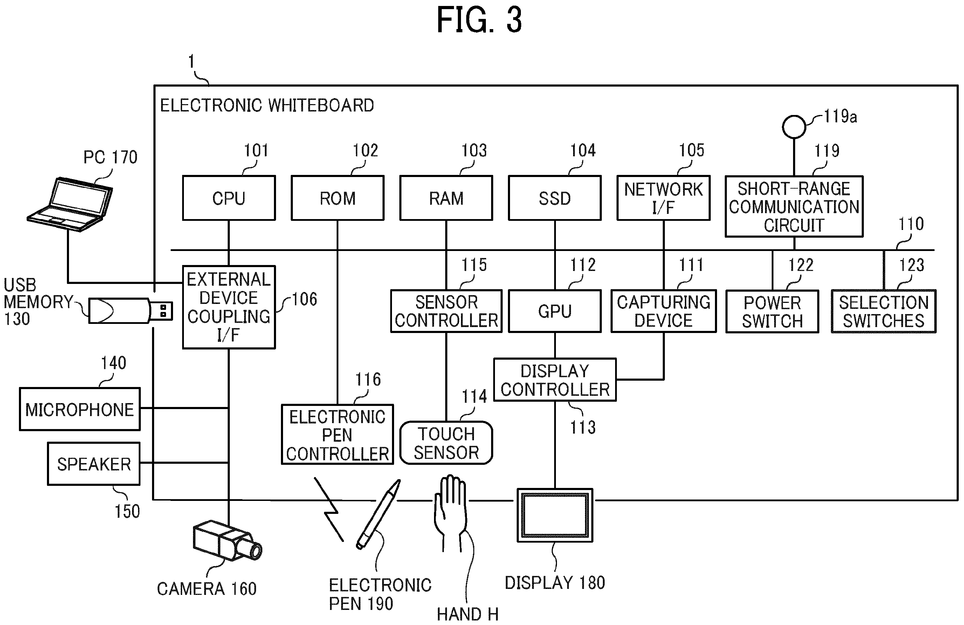

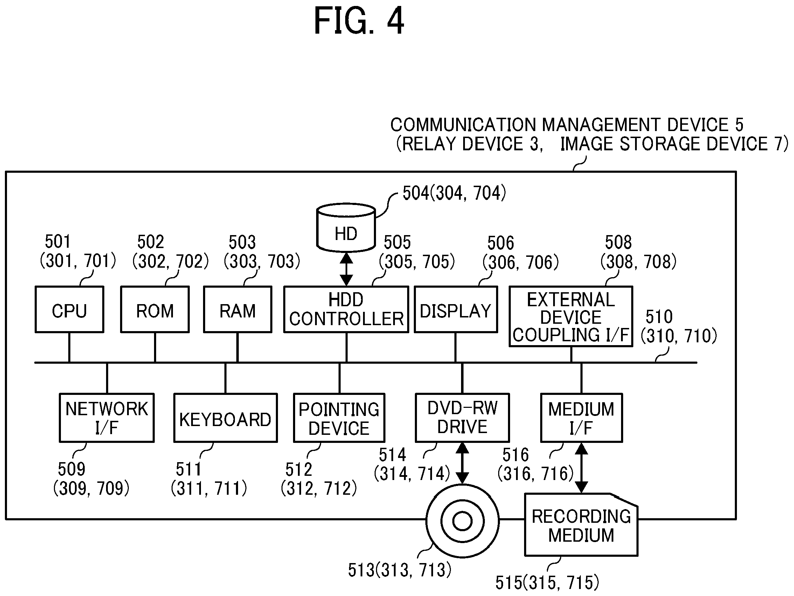

Hardware configurations of the devices and terminals of the communication system are described next with reference to FIGs. 3 and 4. Note that one or more components may be added to or removed from the hardware configurations illustrated in FIGs. 3 and 4 as required. Hardware Configuration of Electronic Whiteboard

FIG. 3 is a block diagram illustrating an example of a hardware configuration of the electronic whiteboard according to the embodiment. As illustrated in FIG. 3, the electronic whiteboard 1 includes the CPU 101, a read-only memory (ROM) 102, a random access memory (RAM) 103, a solid state drive (SSD) 104, a network interface (I/F)105, and an external device coupling I/F 106.

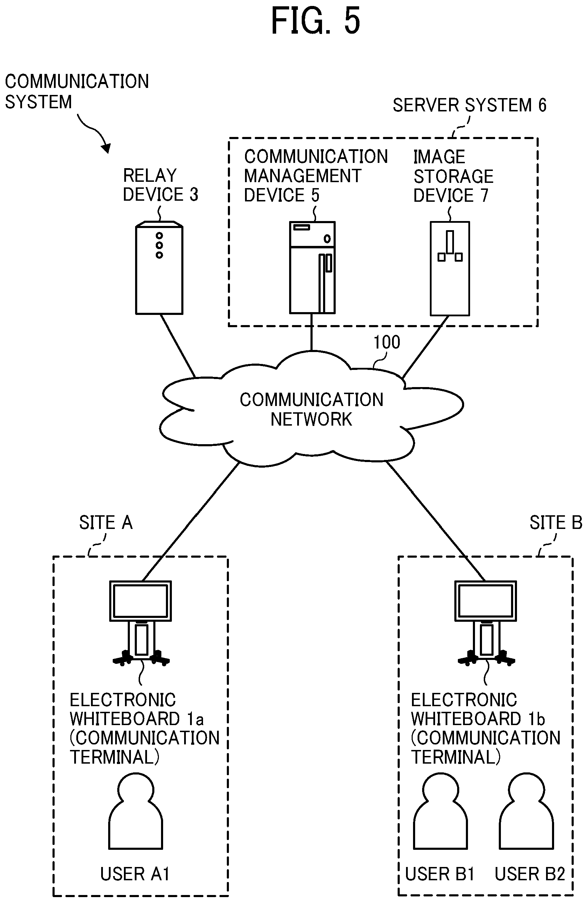

The CPU 101 controls operation of the entire electronic whiteboard 1. The ROM 102 is a nonvolatile memory that stores a program such as an initial program loader (IPL) used for booting the CPU 101. The RAM 103 is a volatile memory used as a work area for the CPU 101. The SSD 104 is a mass storage device that stores various kinds of data such as a program for the electronic whiteboard 1. The network I/F 105 is an interface that connects the electronic whiteboard 1 to a communication network 100 (see FIG. 5) to perform communication. The external device coupling I/F 106 is an interface that couples the electronic whiteboard 1 to various external devices. Examples of the external devices in this case include a Universal Serial Bus (USB) memory 130 and external devices (a microphone 140, a speaker 150, and a camera 160).

The electronic whiteboard 1 further includes a capturing device 111, a graphics processing unit (GPU) 112, a display controller 113, a touch sensor 114, a sensor controller 115, an electronic pen controller 116, a short-range communication circuit 119, an antenna 119a for the short-range communication circuit 119, a power switch 122, and selection switches 123.

The capturing device 111 causes image data (image information) to be displayed as a still image or moving image on a display of a PC 170, which is external to the electronic whiteboard 1. The GPU 112 is a semiconductor chip (processor) dedicated to processing of graphical images. The display controller 113 controls and manages displaying of a screen to output an image output from the GPU 112 to the display 180 or the like. The touch sensor 114 detects a touch of the electronic pen 190 or a user's hand H onto the display 180. The sensor controller 115 controls a process performed by the touch sensor 114. The touch sensor 114 detects a touch input and coordinates of the touch input using the infrared blocking system. The method used for detecting a touch input and coordinate may be as follows. The display 180 is provided with two light emitting/receiving devices disposed on respective upper side ends of the display 180, and with a reflector frame surrounding the sides of the display 180. The light emitting/receiving devices emit a plurality of infrared rays in parallel to a surface of the display 180, and the plurality of infrared rays are reflected by the reflector frame. Light receiving elements of the light emitting/receiving devices receive the infrared rays returning along an optical path that is the same as an optical path of the emitted infrared rays. The touch sensor 114 outputs identifiers (IDs) of one or more infrared rays that are emitted from the two light emitting/receiving devices and are blocked by an object, to the sensor controller 115. Based on the IDs of the infrared rays, the sensor controller 115 identifies coordinates of a position touched with the object. The electronic pen controller 116 communicates with the electronic pen 190 to detect a touch of the top or bottom of the electronic pen 190 onto the display 180. The short-range communication circuit 119 is a communication circuit that is compliant with near-field communication (NFC), Bluetooth (registered trademark), or the like. The power switch 122 is used for powering on and off the electronic whiteboard 1. The selection switches 123 are a group of switches used for adjusting brightness, hue, etc. of images displayed on the display 180, for example.

The electronic whiteboard 1 further includes a bus line 110. The bus line 110 is a bus such as an address bus or data bus that electrically couples the constituents such as the CPU 101 illustrated in FIG. 3 to one another.

The touch sensor 114 is not limited to a sensor of the infrared blocking system type, and may be sensors of various types such as a capacitive touch panel that detects a change in capacitance to identify the touch position, a resistive film touch panel that detects a change in voltage across two opposed resistive films to identify the touch position, and an electromagnetic induction touch panel that detects electromagnetic induction caused by a touch of an object onto a display to identify the touch position. In addition, the electronic pen controller 116 may detect a touch of another part of the electronic pen 190 such as a part held by the user with the hand H as well as the top or bottom of the electronic pen 190.

### Hardware Configurations of Communication Management Device, Relay Device, and Image Storage Device

FIG. 4 is a block diagram illustrating an example of hardware configurations of a communication management device, a relay device, and an image storage device according to the embodiment. The communication management device 5 is implemented by, for example, one or more computers. The one or more computers each include a CPU 501, a ROM 502, a RAM 503, a hard disk (HD) 504, a hard disk drive (HDD) controller 505, a display 506, an external device coupling I/F 508, a network I/F 509, a keyboard 511, a pointing device 512, a digital versatile disc-rewritable (DVD-RW) drive 514, a medium I/F 516, and a bus line 510.

The CPU 501 controls operation of the entire communication management device 5. The ROM 502 is a nonvolatile memory that stores a program such as an IPL used for booting the CPU 501. The RAM 503 is a volatile memory used as a work area for the CPU 501. The HD 504 is a mass storage device that stores various kinds of data such as a communication management program. The HDD controller 505 controls reading of various kinds of data from or writing of various kinds of data to the HD 504 under control of the CPU 501. The display 506 displays various kinds of information such as a cursor, a menu, a window, characters, and an image. The external device coupling I/F 508 is an interface that couples the computer serving as the communication management device 5 to various external devices. The network I/F 509 is an interface that enables communication of data via the communication network 100 such as the Internet. The keyboard 511 is one example of an input device including a plurality of keys that allow a user to input characters, numerals, or various instructions. The pointing device 512 is an example of an input device that allows a user to select or execute various instructions, select a processing target, and move a cursor, for example. The DVD-RW drive 514 controls reading of data from or writing (storing) of data to a DVD-RW 513. Note that the DVD-RW 513 may be replaced with another recording medium such as a digital versatile disc-recordable (DVD-R). The DVD-RW drive 514 may be replaced with another recording medium drive such as a Blu-ray Disc drive that controls reading of data from or writing (storing) of data to a Blu-ray (registered trademark) Disc Rewritable (BD-RE) or a CD-RW drive that controls reading of data from or writing (storing) of data to a compact disc-rewritable (CD-RW). The medium I/F 516 controls reading of data from or writing (storing) of data to a recording medium 515 such as a flash memory. The bus line 510 is a bus such as an address bus or data bus that electrically couples the constituents such as the CPU 501 illustrated in FIG. 4 to one another.

The relay device 3 is implemented by, for example, one or more computers. As illustrated in FIG. 4, the one or more computers each include a CPU 301, a ROM 302, a RAM 303, an HD 304, an HDD controller 305, a display 306, an external device coupling I/F 308, a network I/F 309, a keyboard 311, a pointing device 312, a DVD-RW drive 314, a medium I/F 316, and a bus line 310. Since these constituents have substantially the same configurations as the CPU 501, the ROM 502, the RAM 503, the HD 504, the HDD controller 505, the display 506, the external device coupling I/F 508, the network I/F 509, the keyboard 511, the pointing device 512, the DVD-RW drive 514, the medium I/F 516, and the bus line 510 of the communication management device 5, description thereof is omitted. Note that in the case of the relay device 3, a relay program is stored in the HD 304.

The image storage device 7 is implemented by, for example, one or more computers. As illustrated in FIG. 4, the one or more computers each include a CPU 701, a ROM 702, a RAM 703, an HD 704, an HDD controller 705, a display 706, an external device coupling I/F 708, a network I/F 709, a keyboard 711, a pointing device 712, a DVD-RW drive 714, a medium I/F 716, and a bus line 710. Since these constituents have substantially the same configurations as the CPU 501, the ROM 502, the RAM 503, the HD 504, the HDD controller 505, the display 506, the external device coupling I/F 508, the network I/F 509, the keyboard 511, the pointing device 512, the DVD-RW drive 514, the medium I/F 516, and the bus line 510 of the communication management device 5, description thereof is omitted. Note that in the case of the image storage device 7, an image storage program is stored in the HD 704.

Further, each of the aforementioned programs may be recorded as a file of an installable or executable format on a computer-readable recording medium for distribution. Examples of the recording medium include, but not limited to, a CD-R, a DVD, a Blu-ray Disc, and an SD card. In addition, such a recording medium may be provided in the form of a program product within a certain country or outside that country. For example, the electronic whiteboard 1 executes the program according to the embodiment of the present invention to implement a display control method according to the embodiment of the present invention.

### General Arrangement of Communication System

A general arrangement of the communication system is described next with reference to FIG. 5. FIG. 5 is a diagram illustrating an example of a system configuration of the communication system according to the embodiment.

In FIG. 5, the electronic whiteboard 1a is installed at a site A and the electronic whiteboard 1b is installed at a site B. For example, the site A is a Tokyo office in Japan and the site B is a Beijing office in China. A user A1 uses the electronic whiteboard 1a at the site A, and users B1 and B2 use the electronic whiteboard 1b at the site B.

Further, the electronic whiteboards 1a and 1b, the relay device 3, the communication management device 5, and the image storage device 7 are capable of transmitting and receiving data to and from each other via the communication network 100 such as the Internet or a local area network (LAN), for example. The communication network 100 may include a wireless communication network such as a network in compliance with Wireless Fidelity (Wi-Fi) as well as a wired communication network.

### Functional Configuration of Communication System

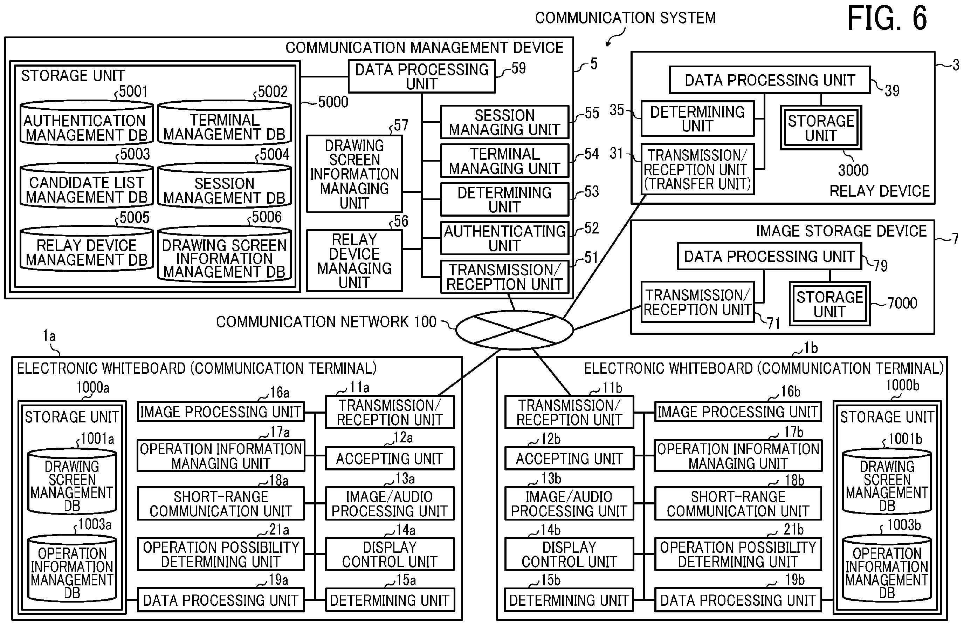

A functional configuration of the communication system according to the embodiment is described next with reference to FIGs. 6 to 12. FIG. 6 is a block diagram illustrating an example of a functional configuration of the communication system according to the embodiment. FIG. 6 illustrates terminals and devices that relate to processes or operations described below among the terminals, devices, and servers illustrated in FIG. 5.

### Functional Configuration of Electronic Whiteboard 1

A functional configuration of each of the electronic whiteboards 1a and 1b is described first with reference to FIG. 6. Since the electronic whiteboard 1a and the electronic whiteboard 1b have substantially the same functions, the description is collectively given of the functions of the electronic whiteboard 1. The electronic whiteboard 1 includes a transmission/reception unit 11, an accepting unit 12, an image/audio processing unit 13, a display control unit 14, a determining unit 15, an image processing unit 16, an operation information managing unit 17, a short-range communication unit 18, an operation possibility determining unit 21, and a data processing unit 19. These units are functions that are implemented by or units that are caused to function by any of the constituents illustrated in FIG. 3 operating in accordance with the instructions of the CPU 101 based on a program loaded to the RAM 103 from the SSD 104. The electronic whiteboard 1 further includes a storage unit 1000, which is implemented by the RAM 103, the SSD 104, or the USB memory 130 illustrated in FIG. 3.

The transmission/reception unit 11 is implemented by instructions of the CPU 101 and by the network I/F 105 which are illustrated in FIG. 3. The transmission/reception unit 11 is a functional unit that transmits various kinds of data (or information) to or receives various kinds of data (or information) from another terminal, device, or system via the communication network 100. The transmission/reception unit 11 also functions as a starting unit, for example, and performs a process of starting communication with another electronic whiteboard 1. The transmission/reception unit 11 transmits and receives drawing screen data to be displayed on the display 180 to and from another electronic whiteboard 1 via the communication management device 5. The transmission/reception unit 11 is an example of receiving means. The accepting unit 12 is implemented by instructions of the CPU 101, by the touch sensor 114, and by the electronic pen controller 116 which are illustrated in FIG. 3. The accepting unit 12 accepts various inputs performed with the electronic pen 190 or the like from the user. The accepting unit 12 is an example of accepting means.

The image/audio processing unit 13 is implemented by instructions of the CPU 101 illustrated in FIG. 3, and performs major processing of the videoconference function. For example, the image/audio processing unit 13 performs digital processing such as encoding of site image data and audio data in accordance with an output signal of the microphone 140 and an output signal of the camera 160. For example, the image/audio processing unit 13 generates an image signal and an audio signal based on the site image data and the audio data received by the transmission/reception unit 11. For example, the image/audio processing unit 13 further performs a process for combining pieces of site image data having different resolutions.

The display control unit 14 is implemented by instructions of the CPU 101 and by the display controller 113 which are illustrated in FIG. 3. The display control unit 14 is a functional unit that performs control for outputting an image signal or the like to the display 180. For example, the display control unit 14 controls the display 180 to display a drawing screen based on drawing screen data generated by the image processing unit 16. The display control unit 14 is an example of display control means. The determining unit 15 is implemented by instructions of the CPU 101 illustrated in FIG. 3, and makes various determinations.

The image processing unit 16 is implemented by instructions of the CPU 101 and the capturing device 111 which are illustrated in FIG. 3. The image processing unit 16 is a functional unit that performs major processing of the electronic whiteboard function. For example, the image processing unit 16 generates stroke data and a stroke image, based on a stroke of the electronic pen 190 or the like that is accepted by the accepting unit 12. For example, the image processing unit 16 generates a stroke image based on the stroke data received by the transmission/reception unit 11. For example, the image processing unit 16 generates drawing screen data including the generated stroke image.

The operation information managing unit 17 is implemented by instructions of the CPU 101 illustrated in FIG. 3. The operation information managing unit 17 is a functional unit that manages operation information regarding one or more operations performed on a drawing screen displayed on the electronic whiteboard 1. For example, the operation information managing unit 17 stores for management operation information regarding each operation performed on the electronic whiteboard 1 in an operation information management DB 1003.

The short-range communication unit 18 is implemented by instructions of the CPU 101, by the short-range communication circuit 119, and by the antenna 119a which are illustrated in FIG. 3. The short-range communication unit 18 is a functional unit that performs short-range wireless communication with each terminal including a short-range communication unit, such as an IC card or smartphone, to obtain and provide data from and to the terminal.

The operation possibility determining unit 21 is implemented by instructions of the CPU 101 illustrated in FIG. 3. The operation possibility determining unit 21 is a functional unit that determines whether a specific operation indicated by an operation request accepted by the electronic whiteboard 1 can be performed. For example, the operation possibility determining unit 21 determines whether an undo or redo process can be performed for an operation target of an operation request, based on the operation information stored in the operation information management DB 1003. The operation possibility determining unit 21 is an example of determining means.

The data processing unit 19 is implemented by instructions of the CPU 101 illustrated in FIG. 3. The data processing unit 19 is a functional unit that stores various kinds of data in the storage unit 1000 or reads various kinds of data from the storage unit 1000. Each time site image data and audio data are received in communication with another terminal, the storage unit 1000 overwrites the site image data and the audio data. The display 180 displays an image based on the site image data before being overwritten. The speaker 150 outputs sound based on the audio data before being overwritten. Further, stroke data of a stroke image drawn on the display 180 and document image data of a document image displayed on the display 180 are stored in the storage unit 1000.

### Drawing Screen Information

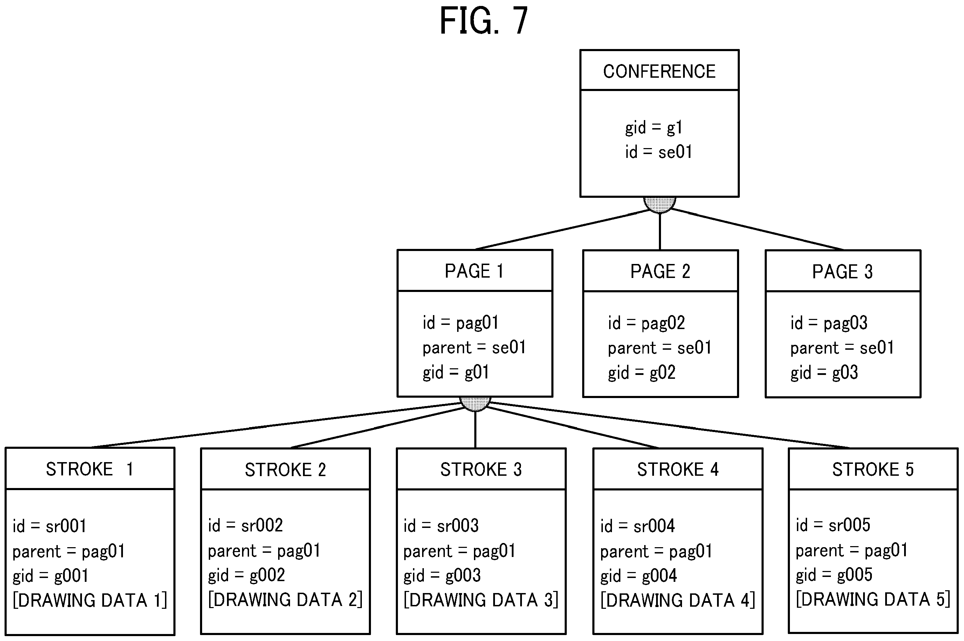

FIG. 7 is a diagram for schematically describing an example of drawing screen information according to the embodiment. FIG. 7 is an illustration of an example of the state of a drawing screen displayed on the electronic whiteboard 1. The state of the drawing screen is stored in a drawing screen management DB 1001.

In the example illustrated in FIG. 7, the drawing screen has a hierarchical structure of "conference", "pages (pages 1 to 3)", and "strokes (strokes 1 to 5)". The "stroke" corresponds to stroke data according to the embodiment and is managed for each "page". The "page" indicates an image (display image) of one page displayed on the display 180. Page data representing the "page" includes pieces of data such as stroke data of a stroke image and image data of a document image that are displayed in the corresponding page. For example, a stroke 1 includes a stroke ID (id = sr001) for identifying the stroke 1, information (parent = pag01) for identifying a page 1 serving as a parent, an ID (gid = g001) for identifying drawing data 1, and drawing data 1, for example. For example, when a move operation or the like is performed on a stroke image represented by the stroke 1, the stroke ID (id = sr001) is continuously used as it is but the drawing data 1 and the ID (gid = g001) for identifying the drawing data 1 are updated. The drawing data 1 is drawing data for reproducing the stroke 1. The stroke data 1 includes coordinate data, line width data, line color data, and vector data, for example.

The electronic whiteboard 1 is capable of switching between pages. The "page" corresponds to each page displayed on the electronic whiteboard 1. For example, a page 1 includes a page ID (id = peg01) for identifying the page 1, and information (parent = se01) for identifying a "Conference" serving as the parent, for example.

The "Conference" corresponds to a session managed by the communication system and, for example, is managed using a session ID (id = se01) for identifying the session. For example, the image processing unit 16 of the electronic whiteboard 1 is capable of generating stroke images drawn on the page 1, by using the drawing data 1 to the drawing data 5 included in the stroke 1 to the stroke 5, respectively.

### Operation Information

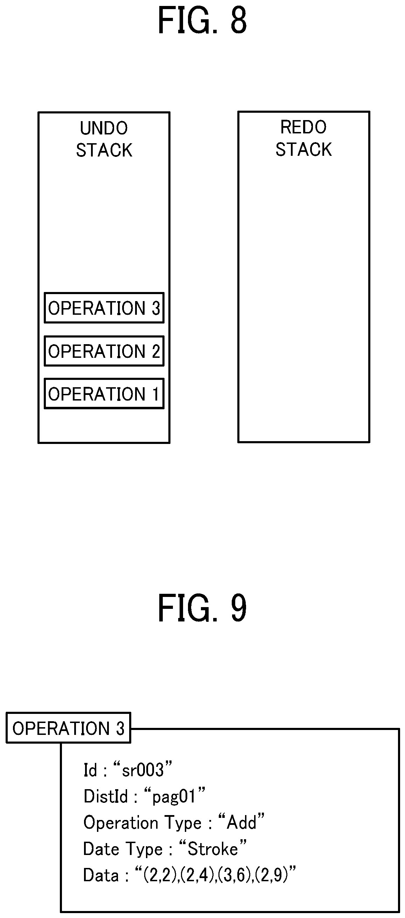

Operation information indicating one or more operations performed on a drawing screen displayed on the electronic whiteboard 1 is now described with reference to FIGs. 8 and 9. FIG. 8 is a diagram for schematically describing an example of an operation information management DB according to the embodiment. The operation information management DB 1003 stores pieces of operation information indicating respective operations performed on a drawing screen displayed on the electronic whiteboard 1 in corresponding stacks of respective types of the operations. The operation information management DB 1003 includes an undo stack and a redo stack. The undo stack stores operation information regarding one or more operations for which an undo process can be performed on a drawing screen. The redo stack stores operation information regarding one or more operations for which a redo process can be performed on the drawing screen. The operation "undo" refers to an operation of cancelling a last operation performed on the drawing screen to restore the previous state of the drawing screen. The operation "redo" refers to an operation of performing again an operation cancelled by the undo operation to restore the state of the drawing screen before the cancellation. The operation information management DB 1003 illustrated in FIG. 8 indicates states of the undo stack and the redo stack in the case where operations 1 to 3 have been performed as a result of three strokes being drawn on the drawing screen, for example. In the undo stack and the redo stack, pieces of operation information regarding operations performed on the corresponding terminal (electronic whiteboard) are stored. The pieces of operation information are serially accumulated from the top in each stack in an order in which the corresponding operations are performed on the electronic whiteboard 1. The operation information management DB 1003 is an example of storage means.

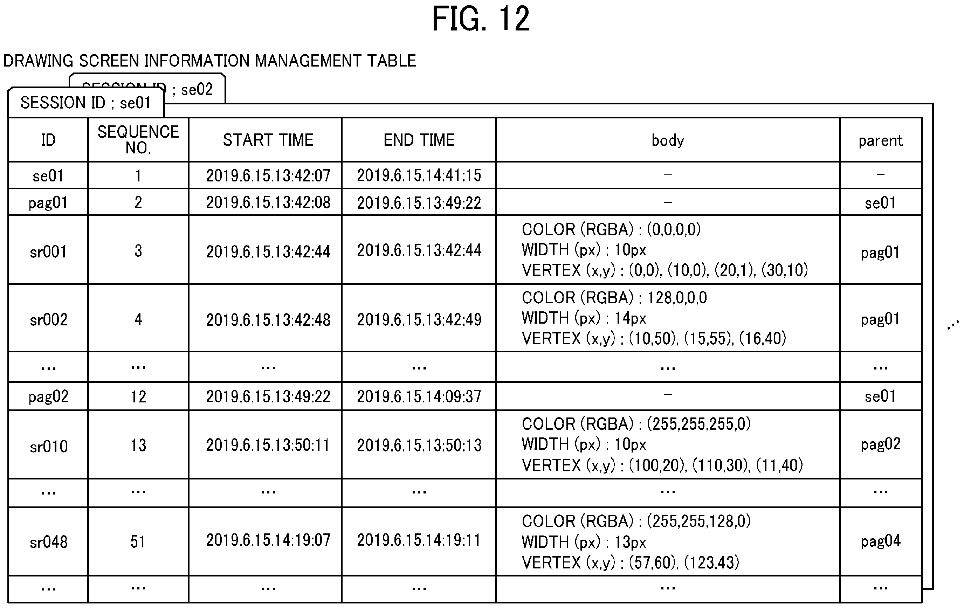

FIG. 9 is a diagram for schematically describing an example of operation information according to the embodiment. The operation information illustrated in FIG. 9 is operation information corresponding to the operation 3 illustrated in FIG. 8. The operation information includes a stroke ID (Id) for identifying stroke data, a page ID (DistId) for identifying a page on which an image corresponding to the stroke data is drawn, operation type information (Operation Type) indicating the type of the operation performed on the drawing screen, data type information (Data Type) indicating the type of data serving as the operation target, and data detail information (Date) indicating content of the data serving as the operation target. The operation type information indicates the type of the operation performed by the user on a stroke or page included the drawing screen. For example, in the case where the operation target is a stroke, the operation type information indicates "Add" when a stroke is drawn, "Remove" when the stroke is removed, and "Update" when the stroke is moved. The data type information indicates "Stroke" when the operation target is a stroke and "Page" when the operation target is a page. In the case where the operation target is a stroke, the data detail information corresponds to stroke data and includes information such as coordinate data, line width data, and line color data. The data detail information corresponds to information stored at a field "body" of a drawing screen information management table (see FIG. 12) described later. Note that the data serving as the operation target is not limited to units of a stroke or page, and may be units of an object which is a set of a plurality of strokes. This object includes text obtained as a symbol such as a character or numeral by performing optical character reader (OCR) processing on the strokes; a system generated character such as the date or time; a predetermined figure such as a triangle, a star, or a circle; or a line such as an arrow, a line segment, or a Bezier curve.

### Functional Configuration of Relay Device

A functional configuration of the relay device 3 is now described with reference to FIG. 6. The relay device 3 includes a transmission/reception unit 31, a determining unit 35, and a data processing unit 39. The transmission/reception unit 31 also functions as a transfer unit. These units are functions that are implemented by or units that are caused to function by any of the constituents illustrated in FIG. 4 operating in accordance with the instructions of the CPU 301 based on the relay program loaded to the RAM 303 from the HD 304. The relay device 3 includes a storage unit 3000, which is implemented by the RAM 303, the HD 304, or a recording medium 315 illustrated in FIG. 4.

The transmission/reception unit 31 is implemented by instructions of the CPU 301 and by the network I/F 309 which are illustrated in FIG. 4. The transmission/reception unit 31 is a functional unit that transmits various kinds of data (or information) to or receives various kinds of data (or information) from another terminal, device, or system via the communication network 100. The transmission/reception unit 31 also functions as a transfer unit, and transfers site image data and audio data transmitted from one terminal to another terminal. The determining unit 35 is implemented by instructions of the CPU 301 illustrated in FIG. 4, and is a functional unit that makes various determinations such as a determination of a data delay state.

The data processing unit 39 is implemented by instructions of the CPU 301 illustrated in FIG. 4. The data processing unit 39 is a functional unit that stores various kinds of data in the storage unit 3000 or reads various kinds of data from the storage unit 3000.

### Functional Configuration of Communication Management Device

A functional configuration of the communication management device 5 is now described with reference to FIG. 6. The communication management device 5 includes a transmission/reception unit 51, an authenticating unit 52, a determining unit 53, a terminal managing unit 54, a session managing unit 55, a relay device managing unit 56, a drawing screen information managing unit 57, and a data processing unit 59. These units are functions that are implemented by or units that are caused to function by any of the constituents illustrated in FIG. 4 operating in accordance with the instructions of the CPU 501 based on the communication management program loaded to the RAM 503 from the HD 504. Further, the communication management device 5 includes a storage unit 5000, which is implemented by the RAM 503, the HD 504, or the recording medium 515 illustrated in FIG. 4.

The transmission/reception unit 51 is implemented by instructions of the CPU 501 and by the network I/F 509 which are illustrated in FIG. 4. The transmission/reception unit 51 is a functional unit that transmits various kinds of data (or information) to or receives various kinds of data (or information) from another terminal or device via the communication network 100. For example, the transmission/reception unit 51 receives stroke data transmitted from one electronic whiteboard 1 and transmits the stroke data to another electronic whiteboard 1.

The authenticating unit 52 is implemented by instructions of the CPU 501 illustrated in FIG. 4 and is a functional unit that performs authentication of a login request sender terminal. In response to the transmission/reception unit 51 receiving login request information, the authenticating unit 52 performs an authentication process for a login request sender terminal using an authentication management DB 5001. The determining unit 53 is implemented by instructions of the CPU 501 illustrated in FIG. 4 and is a functional unit that makes various determinations.

The terminal managing unit 54 is implemented by instructions of the CPU 501 illustrated in FIG. 4. The terminal managing unit 54 is a functional unit that manages various kinds of information regarding the electronic whiteboards 1 stored in a terminal management DB 5002 in accordance with statuses of the electronic whiteboards 1. For example, the terminal managing unit 54 updates information such as an operation status, a reception date and time, and an Internet Protocol (IP) address of a terminal in the terminal management DB 5002. The terminal managing unit 54 also manages a candidate list management DB 5003, and, in response to a request of one electronic whiteboard 1, provides candidate list information including the terminal IDs of candidates for the counterpart terminal managed in the candidate list management DB 5003.

The session managing unit 55 is implemented by instructions of the CPU 501 illustrated in FIG. 4. The session managing unit 55 is a functional unit that manages a session established in the communication system. For example, the session managing unit 55 generates a session ID for identifying a session in response to start request information for requesting the start of communication from the electronic whiteboard 1. For example, the session managing unit 55 also stores for management various kinds of information regarding a session in association with the session ID in a session management DB 5004.

The relay device managing unit 56 is implemented by instructions of the CPU 501 illustrated in FIG. 4. The relay device managing unit 56 is a functional unit that selects the relay device 3 to relay a session from among the plurality of relay devices 3. For example, the relay device managing unit 56 manages a relay device management DB 5005 and uses various kinds of information regarding each relay apparatus 3 stored in the relay device management DB 5005 to select the relay device 3. For example, the relay device managing unit 56 selects the relay device 3 located near the starting terminal on the basis of the IP addresses of the respective relay devices 3 stored in the relay device management DB 5005 and the IP address of the starting terminal. For example, the relay device managing unit 56 selects the relay device 3 on the basis of the maximum data transmission speeds of the respective relay devices 3 stored in the relay device management DB 5005. In the present embodiment, any method may be used as the method of selecting the relay device 3 to relay a session. The number of delay devices 3 included in the communication system may be one.

The drawing screen information managing unit 57 is implemented by instructions of the CPU 501 illustrated in FIG. 4. The drawing screen information managing unit 57 is a functional unit that manages various kinds of data regarding a drawing screen that are transmitted and received between the electronic whiteboards 1 (communication terminals). For example, the drawing screen information managing unit 57 stores for management stroke data transmitted via the session sei from the electronic whiteboard 1 participating in the session sei in association with the session ID in a drawing screen information management DB 5006.

The data processing unit 59 is implemented by instructions of the CPU 501 illustrated in FIG. 4. The data processing unit 59 is a functional unit that stores various kinds of data in the storage unit 5000 or reads various kinds of data from the storage unit 5000. Authentication Management Table

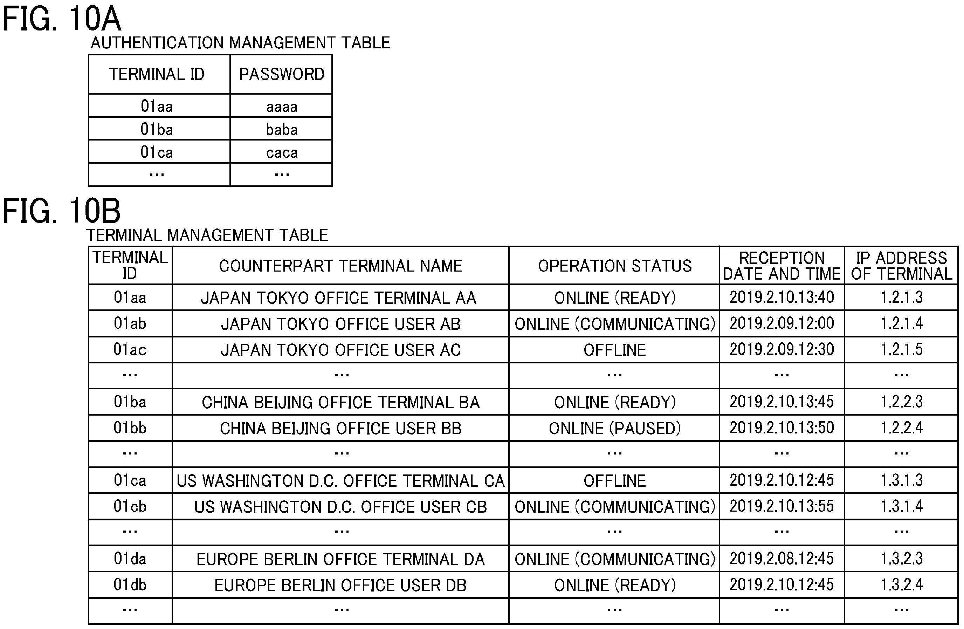

FIG. 10A is an illustration of an example of an authentication management table according to the embodiment. The storage unit 5000 stores the authentication management DB 5001, which is implemented by the authentication management table as illustrated in FIG. 10A. In this authentication management table, each of the terminal IDs of all the electronic whiteboards 1 managed by the communication management device 5 is managed in association with a corresponding password. For example, the authentication management table illustrated in FIG. 10A indicates that the terminal ID of the electronic whiteboard 1a (communication terminal) is "Olaa" and the password of the electronic whiteboard 1a is "aaaa". The password is an example of authentication information. The authentication information also includes an access token.

### Terminal Management Table

FIG. 10B is an illustration of an example of a terminal management table according to the embodiment. The storage unit 5000 stores the terminal management DB 5002, which is implemented by the terminal management table as illustrated in FIG. 10B. In the terminal management table, each of the terminal IDs identifying the respective electronic whiteboards 1 (communication terminals) is managed in association with a counterpart terminal name to be used when the electronic whiteboard 1 is selected as a counterpart terminal, an operation status of the electronic whiteboard 1, reception date and time when login request information described below is received by the communication management device 5, and the IP address of the electronic whiteboard 1 (communication terminal). For example, the terminal management table illustrated in FIG. 10B indicates that the electronic whiteboard 1a assigned the terminal ID "Olaa" has the counterpart terminal name "JAPAN TOKYO OFFICE TERMINAL AA", and the operation status of the electronic whiteboard 1a is "Online (Ready)" Further, the terminal management table indicates that the date and time when the login request information is received by the communication management device 5 is "13:40 on February 10, 2019" and the IP address of the electronic whiteboard 1a is "1.2.1.3". Note that the terminal ID, the counterpart terminal name, and the IP address of the communication terminal are stored when each electronic whiteboard 1 is pre-registered to receive services provided by the communication management device 5.

### Candidate List Management Table

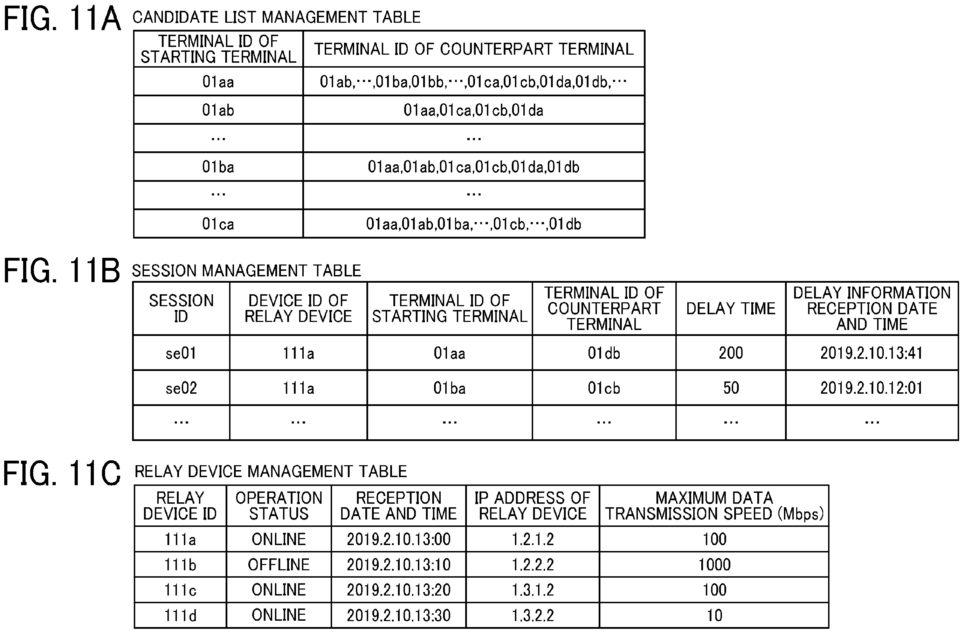

FIG. 11A is an illustration of an example of a candidate list management table according to the embodiment. The storage unit 5000 stores the candidate list management DB 5003, which is implemented by the candidate list management table as illustrated in FIG. 11A. In the candidate list management table, the terminal ID of the electronic whiteboard 1 (starting terminal) that requests the start of communication is managed in association with the terminal IDs of all the electronic whiteboards 1 registered as candidates for the counterpart terminal of the starting terminal. For example, the candidate list management table illustrated in FIG. 11A indicates that candidates for the counterpart terminal to which the starting terminal (electronic whiteboard 1a) assigned the terminal ID "Olaa" can transmit the request for the start of communication are electronic whiteboards including the electronic whiteboard 1b assigned the terminal ID "01ba". The candidates for the counterpart terminal are updated by addition or deletion in response to an addition or deletion request transmitted from any starting terminal to the communication management device 5.

The candidate list is an example of candidate information. In another example, the candidate information may be in, instead of the list format, a format in which pieces of information regarding the candidates such as the terminal IDs are enumerated.

### Session Management Table

FIG. 11B is an illustration of an example of a session management table according to the embodiment. The storage unit 5000 stores the session management DB 5004, which is implemented by the session management table as illustrated in FIG. 11B. In the session management table, each session ID for identifying a session via which mutual communication is performed between each electronic whiteboard 1 (communication terminal) and the relay device 3 is managed in association with a relay device ID of the relay device 3 used, a terminal ID of the electronic whiteboard 1 (starting terminal), a terminal ID of the electronic whiteboard 1 (counterpart terminal), a delay time (ms) in reception of site image data at the counterpart terminal, and a reception date and time when delay information indicating this delay time is received by the communication management device 5 from the counterpart terminal. For example, the session management table illustrated in FIG. 11B indicates that the relay device (assigned the relay device ID "111a") relays site image data and audio data between the electronic whiteboard 1 assigned the terminal ID "Olaa" and the electronic whiteboard 1 assigned the terminal ID "01db" via a communication session established using the session ID "se01" and that there is a delay time of 200 (ms) for the site image data at the electronic whiteboard 1 (counterpart terminal) at "13:41 on February 10, 2019".

### Relay Device Management Table

FIG. 11C is an illustration of an example of a relay device management table according to the embodiment. The storage unit 5000 stores the relay device management DB 5005, which is implemented by the relay device management table as illustrated in FIG. 11C. In the relay device management table, each relay device ID of the relay device 3 is managed in association with the operation status of the relay device 3, the reception date and time when the communication management device 5 received status information indicating the operation status, the IP address of the relay device 3, and the maximum data transmission speed (Mbps) of the relay device 3. For example, the relay device management table illustrated in FIG. 11C indicates that for the relay device 3 assigned the relay device ID "111a", the operation status is "ONLINE", the date and time when the communication management device 5 received the operation status is "13:30 on February 10, 2019", the IP address of the relay device 3 is "1.2.1.2", and the maximum data transmission speed of the relay device 3 is 100 Mbps.

### Drawing Screen Information Management Table

FIG. 12 is an illustration of an example of a drawing screen information management table according to the embodiment. The storage unit 5000 stores the drawing screen information management DB 5006, which is implemented by the drawing screen information management table as illustrated in FIG. 12. In the drawing screen information management table, each session ID for identifying a session via which mutual communication is performed between each electronic whiteboard 1 (communication terminal) and the relay device 3 is managed in association with various kinds of data regarding a drawing screen shared between the electronic whiteboards 1. The pieces of data in the drawing screen information management table correspond to the states of the drawing screens (see FIG. 7) stored in the drawing screen management DB 1001 of each electronic whiteboard 1.

The pieces of data contained in the drawing screen information management table include the ID for identifying data, the start time and the end time of processing corresponding to the data, information (body) indicating content of the data, and information (parent) for identifying parent data. For example, in the case of stroke data, the drawing screen information management table includes the stroke ID for identifying stroke data generated in a "stroke drawing" event, the start time indicating the drawing start time of the stroke, the end time indicating the drawing end time of the stroke, information indicating content of the stroke data, and information for identifying page data serving as the parent. In this case, the information (body) indicating the content of the stroke data includes the color of the drawn stroke, the width indicating the thickness of the line of the drawn stroke, and the vertices (x, y) of the drawn stroke.

Herein, "drawing a stroke" is equivalent to processing of inputting drawing information by a user and indicates an event in which the user brings the electronic pen 190 into contact with the display 180, moves the electronic pen 190 in this state, and separates the electronic pen 190 from the display 180. The color of the stroke is represented in a data format of Red Green Blue Alpha (RGBA), and each element is represented by a numerical value of 0 to 255. The width of the line of the drawn stroke is represented by the number of pixels. The vertices of the drawn stroke are represented by X-Y coordinates. A Bezier curve obtained from the vertices forms a line segment indicating the stroke. With this drawing screen information management table, the communication management device 5 can manage various kinds of data regarding a drawing screen including stroke data that is generated in an event such as a videoconference performed using a specific communication session.

### Functional Configuration of Image Storage Device

A functional configuration of the image storage device 7 is described next with reference to FIG. 6. The image storage device 7 includes a transmission/reception unit 71 and a data processing unit 79. These units are functions that are implemented by or units that are caused to function by any of the constituents illustrated in FIG. 4 operating in accordance with the instructions of the CPU 701 based on the image storage program loaded to the RAM 703 from the HD 704. The image storage device 7 further includes a storage unit 7000, which is implemented by the RAM 703, the HD 704, or a recording medium 715 illustrated in FIG. 4.

The transmission/reception unit 71 is implemented by instructions of the CPU 701 and by the network I/F 709 which are illustrated in FIG. 4. The transmission/reception unit 71 is a functional unit that transmits various kinds of data (or information) to or receives various kinds of data (or information) from another terminal or device via the communication network 100. The data processing unit 79 is implemented by instructions of the CPU 701 illustrated in FIG. 4. The data processing unit 79 is a functional unit that stores various kinds of data in the storage unit 7000 or reads various kinds of data from the storage unit 7000.

### Processes or Operations according to Embodiment

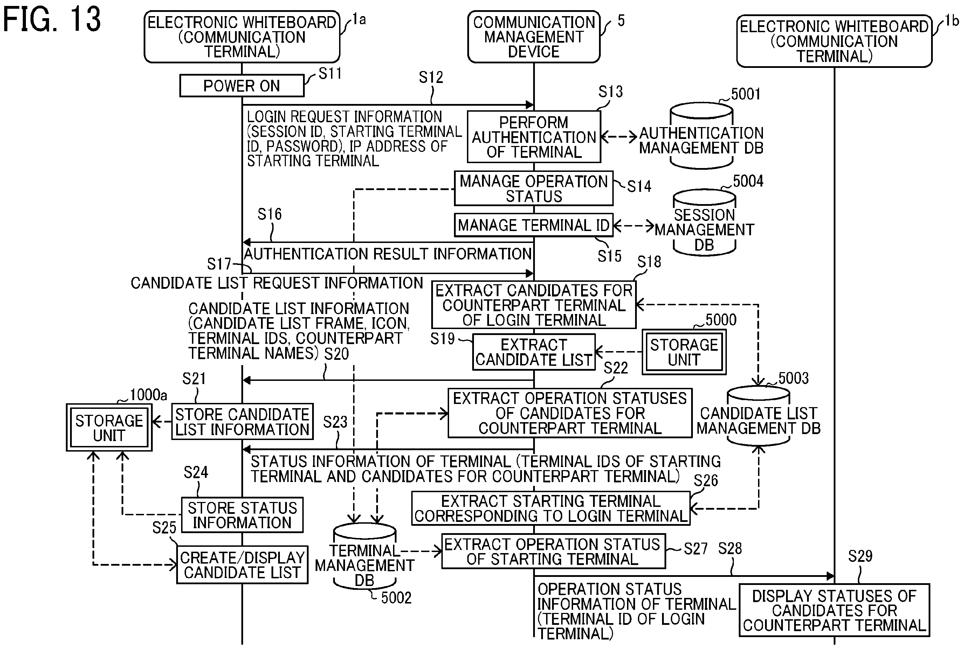

Subsequently, processes or operations performed in the communication system according to the present embodiment are described with reference to FIGs. 13 to 24.

### Process of Preparing for Remote Communication

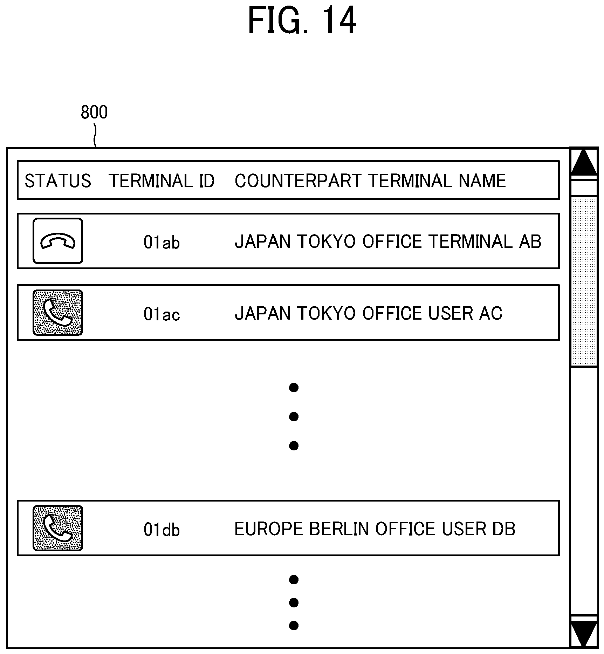

First, a process of preparing for remote communication, performed by the electronic whiteboard 1a serving as a login request sender terminal, is described with reference to FIGs. 13 and 14. FIG. 13 is a sequence diagram illustrating an example of a preparation process for starting remote communication between electronic whiteboards. FIG. 14 is a diagram illustrating an example of a candidate list screen displayed on the electronic whiteboard. The electronic whiteboard 1b performs login and sharing processes in the same or substantially the same manner as the electronic whiteboard 1a, and thus the redundant description thereof is omitted.

In step S11, when the power switch 122 of the electronic whiteboard 1a is turned on, the accepting unit 12a accepts a power-on request.

In step S12, the transmission/reception unit 11a transmits login request information indicating a request for performing login authentication to the communication management device 5 via the communication network 100. This login request information includes the terminal ID and password of the electronic whiteboard 1a. The terminal ID and the password are data that has been read from the storage unit 1000a and has been sent to the transmission/reception unit 11a by the data processing unit 19a. The terminal ID and the password are not limited to these ones, and the terminal ID and the password input by the user using an input device such as a keyboard may be transmitted. In addition, the terminal ID and the password that are read from a recording medium such as a subscriber identity module (SIM) card or an SD card coupled to the electronic whiteboard 1a may be transmitted. Consequently, the transmission/reception unit 51 of the communication management device 5 receives the login request information transmitted from the electronic whiteboard 1a.

Then, the authenticating unit 52 of the communication management device 5 searches the authentication management table (see FIG. 10A) using, as a search key, the terminal ID and the password included in the login request information received via the transmission/reception unit 51. In step S13, the authenticating unit 52 permits the electronic whiteboard 1a to log in if the combination of the terminal ID and the password included in the login request information is managed in the authentication management table. If the combination of the terminal ID and the password included in the login request information is managed in the authentication management table, processing of step S14 and subsequent steps is performed.

If the electronic whiteboard 1a is permitted to log in, the terminal managing unit 54 updates the information associated with the terminal ID "Olaa" of the electronic whiteboard 1a in the terminal management table (see FIG. 10B). For example, in step S14, the terminal managing unit 54 changes the information of the "operation status" associated with the terminal ID "Olaa" to "Online (Ready)" and updates the information of the "reception date and time" to the reception date and time of the login request information. The IP address transmitted from the electronic whiteboard 1a in step S12 may be used instead of the IP address of the terminal that has been registered in advance. Consequently, in the terminal management table, the terminal ID "01aa", the operation status "Online (Ready)", the reception date and time "13:40 February 10, 2019", and the IP address "1.2.1.3" are managed in association with one another as illustrated in FIG. 10B.

In step S15, the session managing unit 55 adds a new record to the session management table (see FIG. 11B) to manage, as the terminal ID of the starting terminal, the terminal ID "Olaa" of the electronic whiteboard 1a received in step S12 in the new record. In step S16, the transmission/reception unit 51 of the communication management device 5 transmits, via the communication network 100, authentication result information indicating the authentication result obtained through the processing of step S13 to the electronic whiteboard 1a that has sent the login request.

In step S17, in response to the transmission/reception unit 11a of the electronic whiteboard 1a (login request sender terminal) receiving the authentication result information indicating that the electronic whiteboard 1a is permitted to log in, the transmission/reception unit 11a transmits candidate list request information for requesting for a candidate list to the communication management device 5 via the communication network 100. Consequently, the transmission/reception unit 51 of the communication management device 5 receives the candidate list request information.

The terminal managing unit 54 then searches the candidate list management table (see FIG. 11A) using, as a search key, the terminal ID "Olaa" of the electronic whiteboard 1a (login request sender terminal) and reads terminal IDs of the candidates for the counterpart terminal which can communicate with the electronic whiteboard 1a. In step S18, the terminal managing unit 54 reads the counterpart terminal names corresponding to the respective terminal IDs of the candidates for the counterpart terminal from the terminal management table (FIG. 10B). In this example, the terminal IDs of the respective candidates for the counterpart terminal that are associated with the terminal ID "Olaa" of the electronic whiteboard 1a and counterpart terminal names corresponding to the respective terminal IDs are extracted.

In step S19, for example, the transmission/reception unit 51 reads data representing the candidate list frame and icon data indicating the operation status from the storage unit 5000 through the data processing unit 59. In step S20, the transmission/reception unit 51 transmits candidate list information including the data of the candidate list frame and the icon data that have been read and including the terminal IDs and the counterpart terminal names extracted in step S18 to the electronic whiteboard 1a. Consequently, the transmission/reception unit 11a of the electronic whiteboard 1a receives the candidate list information. In step S21, the data processing unit 19a stores the received candidate list information in the storage unit 1000a.

As described above, in the present embodiment, the communication management device 5 centrally manages the candidate list information of all terminals, instead of each terminal individually managing the candidate list information. For example, even when a new electronic whiteboard 1 is added to the communication system, when a terminal already included in the communication system is replaced with a new model, or when appearance of the candidate list frame is changed, since the communication management device 5 centrally copes with these cases in the communication system according to the present embodiment, time and efforts for changing the candidate list information on each terminal can be saved.

The terminal managing unit 54 searches the terminal management table (see FIG. 10B) by using, as a search key, each of the terminal IDs of the candidates for the counterpart terminal which are extracted in step S18, to read the corresponding operation status associated with the terminal ID of the candidate for the counterpart terminal. Consequently, in step S22, the terminal managing unit 54 obtains the operation statuses of the respective electronic whiteboards 1 that correspond to the respective terminals IDs of the candidates for the counterpart terminal.

In step S23, the transmission/reception unit 51 transmits terminal status information including the terminal IDs that are used as the search keys in step S22 and the operation statuses of the corresponding candidates for the counterpart terminal to the electronic whiteboard 1a via the communication network 100.

In step S24, the data processing unit 19a of the electronic whiteboard 1a sequentially stores the pieces of operation status information of the terminals received from the communication management device 5 in the storage unit 1000a. That is, the electronic whiteboard 1a receives the pieces of operation status information of the respective electronic whiteboards to obtain current operation statuses of the electronic whiteboards such as the electronic whiteboard 1b, which are candidates for the counterpart terminal and can communicate with the electronic whiteboard 1a.

The display control unit 14a then creates a candidate list in which the statuses of the terminals serving as the candidates for the counterpart terminal are reflected, on the basis of the candidate list information and the operation status information of the terminals stored in the storage unit 1000a. In step S25, the display control unit 14a uses the created candidate list to cause the display 180 of the electronic whiteboard 1a to display a candidate list screen 800 as illustrated in FIG. 14. The candidate list screen 800 displays, for each candidate for the counterpart terminal, an icon indicating the operation status, the terminal ID, and the counterpart terminal name. In FIG. 14, the displayed icons indicating the operation statuses of the communication terminals indicate "Offline", "Online (Ready)", and so on from the top.

In step S26, the terminal managing unit 54 of the communication management device 5 searches the candidate list management table (see FIG. 11A) using the terminal ID "Olaa" of the electronic whiteboard 1a to extract terminal IDs of other terminals registered as the candidates for the counterpart terminal of the electronic whiteboard 1a. In the case of the candidate list management table illustrated in FIG. 11A, the terminal IDs of the other terminals to be read in step S26 are "01ba", "01ca", "01da", and so on.

In step S27, the terminal managing unit 54 then searches the terminal management table (see FIG. 10B) using the terminal ID "Olaa" of the electronic whiteboard 1a to obtain the operation status of the electronic whiteboard 1a.

In step S28, the transmission/reception unit 51 transmits the terminal status information including the terminal ID "Olaa" of the electronic whiteboard 1a and the operation status "Online" obtained in step S27, to the communication terminal(s) whose operation status is "Online" in the terminal management table (see FIG. 10B) among the communication terminals whose terminal IDs are extracted in step S26. When the transmission/reception unit 51 transmits the terminal status information to the electronic whiteboard 1b, the IP addresses of the candidates managed in the terminal management table (see FIG. 10B) are referred to based on the respective terminal IDs. Thus, each of the counterpart terminals that can communicate with the electronic whiteboard 1a as a counterpart terminal candidate is informed of the terminal ID "Olaa" and the operation status "Online" of the electronic whiteboard 1a. Accordingly, in step S29, the operation statuses of the candidates for the counterpart terminal can be displayed on the candidates for the counterpart terminal (such as the electronic whiteboard 1b).

### Process of Starting Remote Communication

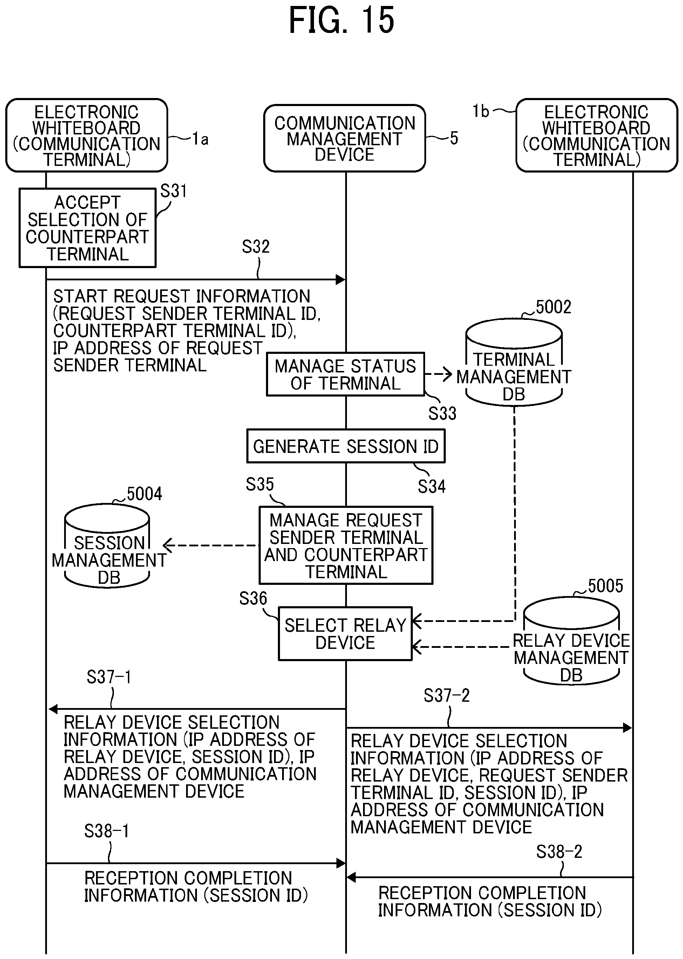

A process performed by the electronic whiteboard 1a to start remote communication with the electronic whiteboard 1b is described with reference to FIG. 15. FIG. 15 is a sequence diagram illustrating an example of a process of starting remote communication.

When the user A1 of the starting terminal (electronic whiteboard 1a) selects the electronic whiteboard 1b by selecting one (terminal ID "01ba") of the candidates for the counterpart terminal in FIG. 14, the accepting unit 12a accepts a request for starting a call with the selected counterpart terminal (electronic whiteboard 1b) in step S31. In step S32, the transmission/reception unit 11a of the starting terminal (electronic whiteboard 1a) transmits start request information indicating a request for starting a call to the communication management device 5. The start request information includes the terminal ID "Olaa" of the starting terminal (electronic whiteboard 1a) and the terminal ID "Olba" of the counterpart terminal (electronic whiteboard 1b). Consequently, the transmission/reception unit 51 of the communication management device 5 receives the start request information and the IP address of the starting terminal (electronic whiteboard 1a) from which the start request information is transmitted.

The terminal managing unit 54 then updates the terminal management table (see FIG. 10B) on the basis of the terminal ID "Olaa" of the starting terminal (electronic whiteboard 1a) and the terminal ID "Olba" of the counterpart terminal (electronic whiteboard 1b) that are included in the start request information. For example, the terminal managing unit 54 updates the operation statuses associated with the terminal IDs "Olaa" and "Olba" in the terminal management table to "Online (Communicating)" on the basis of the terminal ID "Olaa" of the starting terminal and the terminal ID "Olba" of the counterpart terminal that are included in the start request information. The electronic whiteboard 1a which is the starting terminal and the electronic whiteboard 1b which is the counterpart terminal do not participate in a session in this state but are managed as being in a status "communicating" in step S33. The starting terminal (electronic whiteboard 1a) and the counterpart terminal (electronic whiteboard 1b) have not started a videoconference in this state but are in a busy status. In this case, when a third electronic whiteboard (e.g., terminal participating from the middle) attempts to make a call with the starting terminal (electronic whiteboard 1a) or the counterpart terminal (electronic whiteboard 1b) (that is, attempts to participate in the videoconference from the middle), a notification sound or message indicating a busy status is output.

Processing of establishing a session for selecting the relay device 3 to be actually used is described next. In step S34, the session managing unit 55 of the communication management device 5 first generates a session ID for identifying a session established between the electronic whiteboard 1a and the electronic whiteboard 1b. In this example, the case where the session ID "se01" is generated is described.

In step S35, the session managing unit 55 stores for management the session ID "se01" generated in step S34, the terminal ID "Olaa" of the starting terminal (electronic whiteboard 1a), and the terminal ID "Olba" of the counterpart terminal (electronic whiteboard 1b) in association with one another in the session management table (see FIG. 11B).

In step S36, the relay device managing unit 56 then selects the relay device 3 to relay the session between the starting terminal (electronic whiteboard 1a) and the counterpart terminal (electronic whiteboard 1b). For example, the relay device managing unit 56 selects, from among the relay device IDs of the relay devices 3 whose operation statuses are "Online" in the relay device management table (see FIG. 11C), the relay device 3 having the IP address that is close to the IP address of the starting terminal (electronic whiteboard 1a) stored in the terminal management table (see FIG. 10B). The following description is given of a case where the relay device 3 assigned the relay device ID "111a" is selected.

In response to the end of the relay device selection processing in step S36 described above, the transmission/reception unit 51 of the communication management device 5 transmits relay device selection information to the starting terminal (electronic whiteboard 1a) in step S37-1. The relay device selection information includes the IP address of the relay device 3 selected in step S36 and the session ID "se01" generated in step S34. Consequently, the starting terminal (electronic whiteboard 1a) obtains the IP address of the communication management device 5 that has transmitted the relay device selection information.

In step S37-2, the transmission/reception unit 51 of the communication management device 5 transmits the relay device selection information to the counterpart terminal (electronic whiteboard 1b). The relay device selection information includes the IP address of the relay device 3 selected in step S36, the terminal ID "Olaa" of the starting terminal (electronic whiteboard 1a), and the session ID "se01" generated in step S34. Consequently, the counterpart terminal (electronic whiteboard 1b) obtains the IP address of the communication management device 5 that has transmitted the relay device selection information, in establishment of the session assigned the session ID "se01".

In step S38-1, the transmission/reception unit 11 of the starting terminal (electronic whiteboard 1a) transmits, to the communication management device 5, reception completion information indicating that reception of the relay device selection information is completed through the processing of step S37-1. The reception completion information includes the session ID transmitted and received in the processing of step S37-1. Consequently, the communication management device 5 is informed that the transmission of the relay device selection information is completed with the specific session ID "se01".

In step 38-2, the counterpart terminal (electronic whiteboard 1b) also transmits, to the communication management device 5, reception completion information indicating that reception of the relay device selection information is completed through the processing of step S37-2. In this case, the communication management device 5 is also informed that the transmission of the relay device selection information is completed with the specific session ID "se01".

Thus, the electronic whiteboards 1a and 1b can transmit and receive site image data and audio data to and from each other via the relay device 3 selected in step S36 to perform a videoconference.

### Process of Sharing Stroke Image

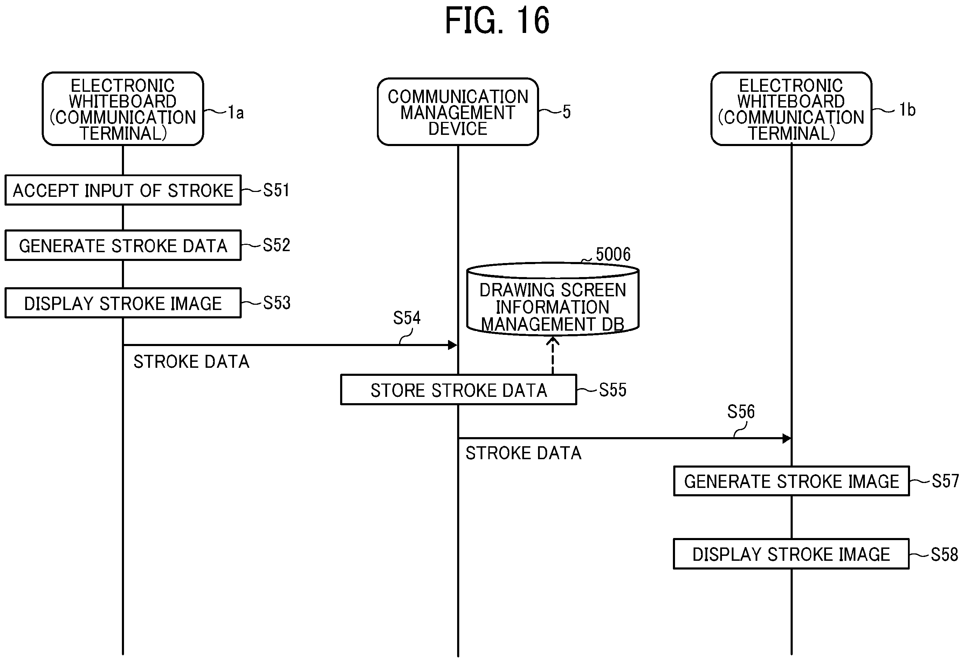

Referring next to FIG. 16, a process of sharing a stroke image between the plurality of electronic whiteboards 1 is described. In the communication system according to the embodiment, the user A1 of the electronic whiteboard 1a participating in the videoconference and the users B1 and B2 of the electronic whiteboard 1b participating the videoconference can display a stroke image drawn on the corresponding one of the electronic whiteboards 1 with the electronic pen 190 or the like, as a shared image on the other electronic whiteboard 1. An example of a process of sharing a stroke image between the electronic whiteboard 1a and the electronic whiteboard 1b participating in the same session is described.

FIG. 16 is a sequence diagram illustrating an example of the process of sharing stroke data according to the embodiment. It is assumed that, at the time of starting the process illustrated in FIG. 16, the electronic whiteboard 1a and the electronic whiteboard 1b have participated in the same session, for example, as a result of the process of starting a session illustrated in FIG. 15. It is also assumed that the electronic whiteboard 1a and the electronic whiteboard 1b share a document image via the image storage device 7 as required and display the document image on the display 180.

In step S51, the user A1 draws a stroke by moving the electronic pen 190 or the hand H while keeping the electronic pen 190 or the hand H in contact with the display 180 of the electronic whiteboard 1a, and the accepting unit 12a accepts input of the drawn stroke (trajectory). In step S52, the image processing unit 16a of the electronic whiteboard 1a generates stroke data for displaying a stroke image corresponding to the stroke accepted by the accepting unit 12a.

In step S53, the display control unit 14a of the electronic whiteboard 1a causes the display 180 to display the stroke image on the basis of the stroke data generated by the image processing unit 16a. Consequently, the stroke image drawn with the electronic pen 190 or the like on the display 180 of the electronic whiteboard 1a by the user A1 is displayed on the display 180 of the electronic whiteboard 1a.

In step S54, the transmission/reception unit 11a of the electronic whiteboard 1a transmits the stroke data for reproducing the stroke image dawn by the user A1 to the communication management device 5 via the session sei, for example. Consequently, the transmission/reception unit 51 of the communication management device 5 receives the stroke data transmitted from the electronic whiteboard 1a.

In step S55, the transmission/reception unit 51 of the communication management device 5 stores the stroke data received from the electronic whiteboard 1a in the drawing screen information management table illustrated in FIG. 12, for example. In step S56, the drawing screen information managing unit 57 transfers the stroke data to the electronic whiteboard 1b that is participating in the same session as the electronic whiteboard 1a. Consequently, the transmission/reception unit 11b of the electronic whiteboard 1b receives the stroke data.

In step S57, the image processing unit 16b of the electronic whiteboard 1b generates a stroke image based on the stroke data received by the transmission/reception unit 11b. In step S58, the display control unit 14b controls the display 180 to display the stroke image generated by the image processing unit 16b, that is, the stroke image drawn by the user A1 in step S51.

As described above, the electronic whiteboard 1a and the electronic whiteboard 1b that are participating in the same session can share a stroke image. In the case where the user B1 or user B2 draws a stroke with the electronic pen 190 or the like on the electronic whiteboard 1b, the stroke image can be displayed on the electronic whiteboard 1a in the similar manner.

### Process of Undoing and Redoing Operation on Drawn Image

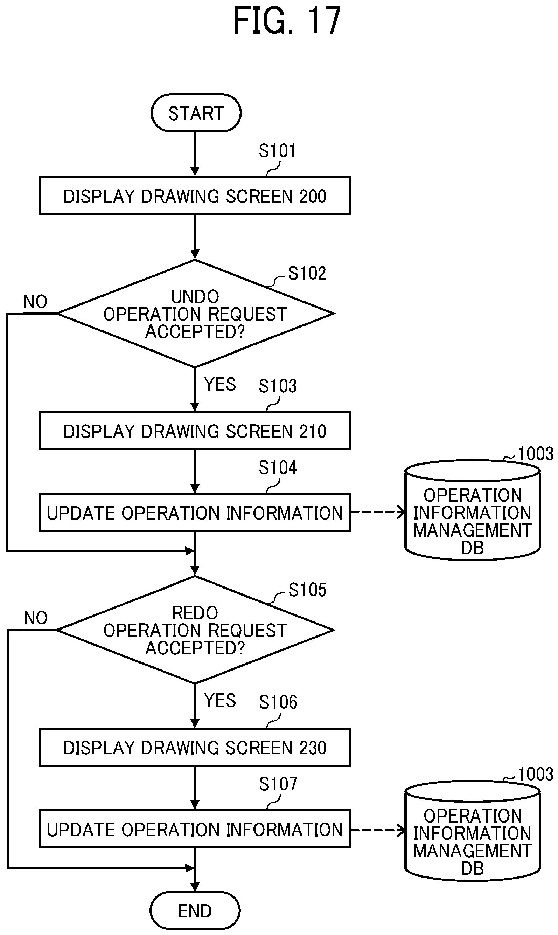

Referring next to FIGs. 17 to 20, basic undo and redo processes performed by the electronic whiteboard 1 are described. FIG. 17 is a flowchart illustrating an example of a process of undoing and redoing an operation performed on a drawn image on the electronic whiteboard according to the embodiment.

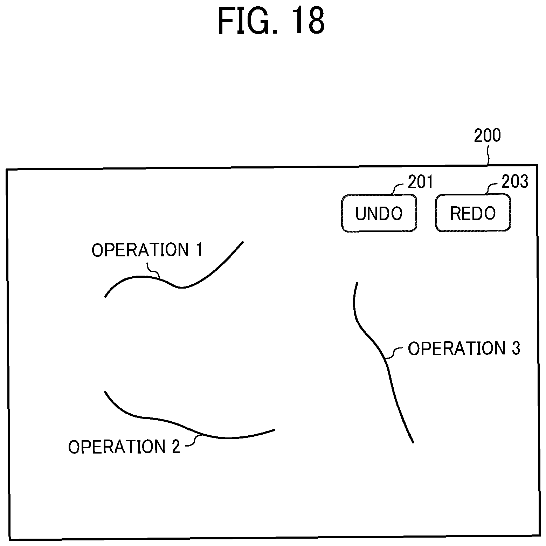

In step S101, the display control unit 14 of the electronic whiteboard 1 controls the display 180 to display a drawing screen 200 as illustrated in FIG. 18. The drawing screen 200 illustrated in FIG. 18 includes stroke images drawn through the process illustrated in FIG. 16. The drawing screen 200 presents a display state in the case where the user has drawn three strokes using the electronic pen 190 or the like. The three strokes are drawn in an order of an operation 1, an operation 2, and an operation 3. The drawing screen 200 also includes an "Undo" button 201 to be pressed when an undo process is performed on the drawn content, and a "Redo" button 203 to be pressed when a redo process is performed on the drawn content.

In response to the user of the electronic whiteboard 1 pressing the "Undo" button 201 in the drawing screen 200, the accepting unit 12 accepts an undo operation request for requesting execution of the undo operation in step S102. If the accepting unit 12 of the electronic whiteboard 1 accepts the undo operation request (YES in step S102), the process proceeds to step S103. On the other hand, if the accepting unit 12 of the electronic whiteboard 1 does not accept the undo operation request (NO in step S102), the process proceeds to step S105.

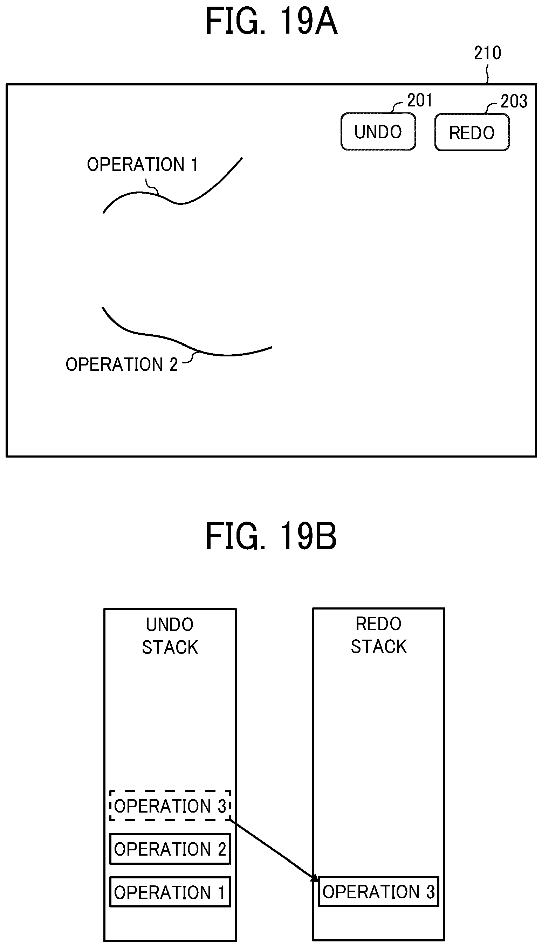

In step S103, the display control unit 14 performs the undo process in response to the undo operation request accepted by the accepting unit 12, and controls the display 180 to display a drawing screen 210 illustrated in FIG. 19A. The drawing screen 210 illustrated in FIG. 19A is a display screen that is displayed when the undo process is performed on the drawing screen 200 once. The drawing screen 210 presents a state in which the operation 3 which is the latest operation among the strokes (operations 1 to 3) drawn in the drawing screen 200 has been canceled and the stroke image corresponding to the operation 3 has been deleted.

In step S104, the operation information managing unit 17 updates the operation information stored in the operation information management DB 1003 on the basis of the undo process that has been performed. FIG. 19B is a diagram for schematically describing the state of the operation information management DB when the undo process is performed on the electronic whiteboard according to the embodiment. The operation information managing unit 17 extracts (pops) information regarding the operation 3 stored in the undo stack in response to the undo process. The operation 3 is processing for adding a stroke as illustrated in FIG. 9. Thus, the operation information managing unit 17 searches the drawing screen information stored in the drawing screen management DB 1001 for the corresponding stroke data to perform the opposite operation, and deletes the stroke image corresponding to the stroke data. In this manner, the operation information managing unit 17 can implement the undo process for the operation 3. The operation information managing unit 17 then stores (pushes) the operation information regarding the operation 3 in the redo stack in response to the undo process.

Subsequently, the redo process performed by the electronic whiteboard 1 is described. In response to the user of the electronic whiteboard 1 pressing the "Redo" button 203 included in the drawing screen 210, the accepting unit 12 accepts a redo operation request for requesting execution of a redo operation in step S105. If the accepting unit 12 of the electronic whiteboard 1 accepts the redo operation request (YES in step S105), the process proceeds to step S106. On the other hand, if the accepting unit 12 of the electronic whiteboard 1 does not accept the redo operation request (NO in step S105), the process ends.

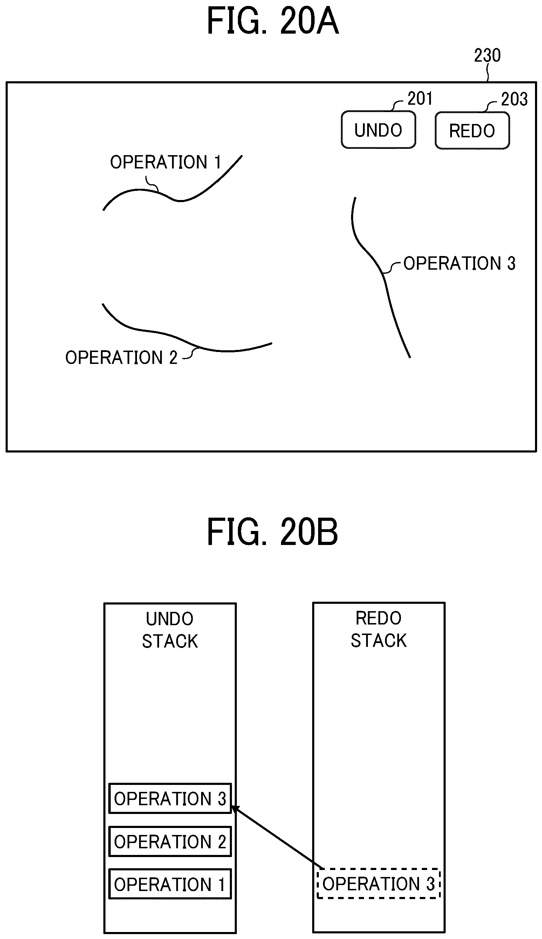

In step S106, the display control unit 14 performs the redo process in response to the redo operation request accepted by the accepting unit 12, and controls the display 180 to display a drawing screen 230 illustrated in FIG. 20A. The drawing screen 230 illustrated in FIG. 20A is a display screen that is displayed when the redo process is performed on the drawing screen 210 illustrated in FIG. 19A once. The drawing screen 210 illustrated in FIG. 19A presents a state in which the stroke image corresponding to the operation 3 has been deleted by the undo process. Thus, the drawing screen 230 presents a state in which the stroke image corresponding to the operation 3 has been drawn again by the redo process. That is, the drawing screen 230 presents a state in which the stroke image corresponding to the operation 3, which has been canceled in step S103, is restored by the redo process. Thus, the drawing screen 230 has the same drawn content as the drawing screen 200 illustrated in FIG. 18.

In step S107, the operation information managing unit 17 updates the operation information stored in the operation information management DB 1003 on the basis of the redo process that has been performed. FIG. 20B is a diagram for schematically describing the state of the operation information management DB when the redo process is performed on the electronic whiteboard according to the embodiment. The operation information managing unit 17 extracts (pops) information regarding the operation 3 stored in the redo stack, in response to the redo process. The operation 3 is for adding a stroke as illustrated in FIG. 9. Thus, to perform the same operation, the image processing unit 16 generates a stroke image on the basis of the operation information regarding the operation 3 and stores the generated stroke image (drawing data) in the drawing screen management DB 1001. In this manner, the operation information managing unit 17 can implement the redo process for the operation 3. The operation information managing unit 17 then stores (pushes) operation information regarding the operation 3 in the undo stack in response to the redo process.

As described above, the electronic whiteboard 1 stores operation information regarding an operation performed on a drawing screen in the undo stack and the redo stack included in the operation information management DB 1003 to be able to perform the undo process and the redo process on the drawing screen.

### Process of Determining Whether Operation Is Performed

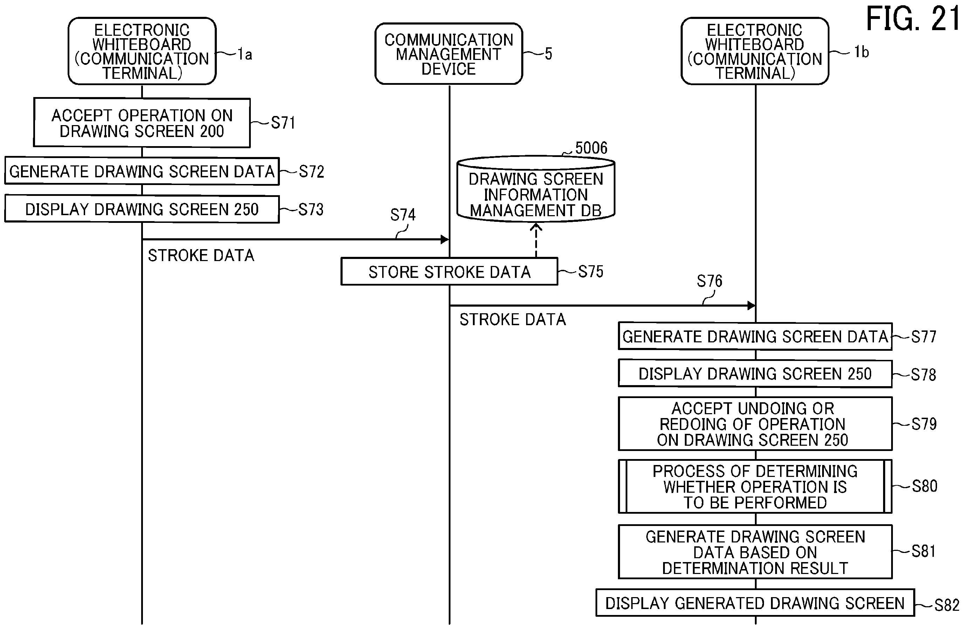

Referring next to FIGs. 21 to 24, description is given of a process of determining whether an operation can be performed in a case where operations on the drawing screen conflict between the plurality of electronic whiteboards 1. FIG. 21 is a sequence diagram illustrating an example of a process of displaying a drawing screen in the case where operations conflict between a plurality of electronic whiteboards in the communication system according to the embodiment. FIG. 21 illustrates the process performed in the case where the electronic whiteboard 1a performs an operation on the drawing screen first. It is assumed that the drawing screen 200 illustrated in FIG. 18 is displayed on the display 180 of the electronic whiteboard 1a and the display 180 of the electronic whiteboard 1b. Description is given on the assumption that the stroke image corresponding to the operation 3 illustrated in the drawing screen 200 is drawn on the electronic whiteboard 1b prior to the process illustrated in FIG. 21.

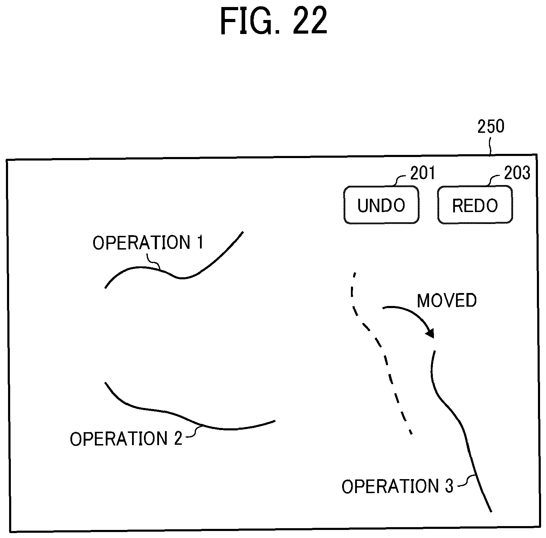

In step S71, the user A1 of the electronic whiteboard 1a moves the stroke image illustrated in the drawing screen 200 using the electronic pen 190 or the like, and the accepting unit 12a accepts the operation on the drawing screen 200. For example, the user A1 moves the stroke image corresponding to the operation 3 in the drawing screen 200 to a lower right portion as in a drawing screen 250 illustrated in FIG. 22.

In step S72, the image processing unit 16a generates drawing screen data corresponding to the operation accepted by the accepting unit 12a. In step S73, the display control unit 14a controls the display 180 to display the drawing screen 250 (see FIG. 22) based on the drawing screen data generated by the image processing unit 16a.

In step S74, the transmission/reception unit 11a transmits the stroke data corresponding to the operation accepted by the accepting unit 12a to the communication management device 5. Consequently, the transmission/reception unit 51 of the communication management device 5 receives the stroke data transmitted from the electronic whiteboard 1a. In step S75, the drawing screen information managing unit 57 of the communication management device 5 stores the stroke data received by the transmission/reception unit 51 in the drawing screen information management table illustrated in FIG. 12, for example. In step S76, the transmission/reception unit 51 transfers, to the electronic whiteboard 1b, the stroke data transmitted from the electronic whiteboard 1a. Consequently, the transmission/reception unit 11b of the electronic whiteboard 1b receives the stroke data transmitted from the communication management device 5.

In step S77, the image processing unit 16b of the electronic whiteboard 1b generates drawing screen data of a drawing screen to be displayed on the electronic whiteboard 1b, based on the stroke data received by the transmission/reception unit 11b. In step S78, the display control unit 14b controls the display 180 to display the drawing screen 250 (see FIG. 22) based on the drawing screen data generated by the image processing unit 16b. The drawing screen 250 illustrated in FIG. 22 presents a state in which the stroke image corresponding to the operation 3 in the drawing screen 200 has been moved to the lower right portion. That is, the drawing screen 250 that is the same as the drawing screen displayed on the display 180 of the electronic whiteboard 1a in step S73 is displayed on the electronic whiteboard 1b. Since the movement of the stroke image corresponding to the operation 3 is an operation performed by the electronic whiteboard 1a, the operation information managing unit 17b does not update the operation information corresponding to the operation 3 stored in the operation information management DB 1003b in this case. That is, the states of the undo stack and the redo stack included in the operation information management DB 1003b of the electronic whiteboard 1b are kept in the same as the states illustrated in FIG. 8.

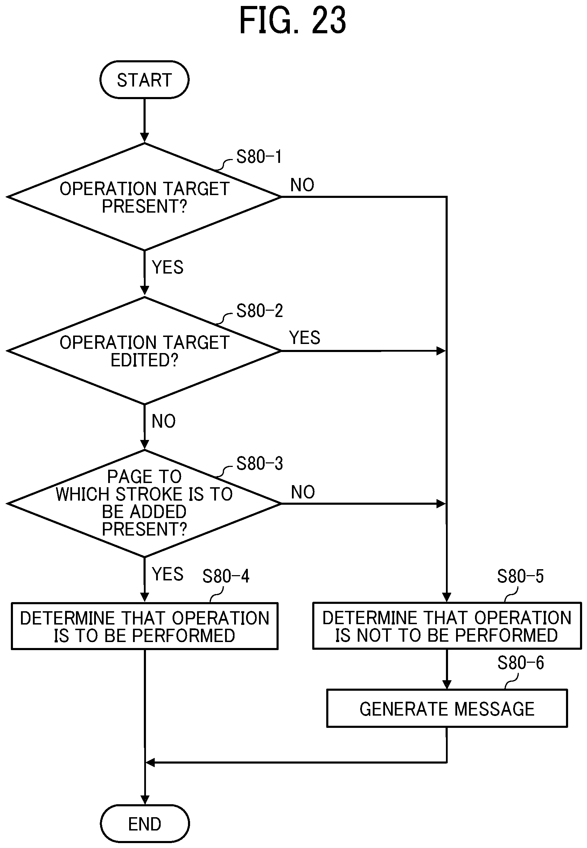

In step S79, the user B1 of the electronic whiteboard 1b presses the "Undo" button 201 or the "Redo" button 203 in the drawing screen 250, and the accepting unit 12b accepts an operation request for requesting undoing or redoing the operation that has been performed on the drawing screen 250. The following description is given of the case where the accepting unit 12b accepts an undo operation request for requesting the undo operation. In step S80, the operation possibility determining unit 21b of the electronic whiteboard 1b performs processing of determining whether the operation can be performed on the basis of the operation request accepted by the accepting unit 12b. Details of the processing performed by the operation possibility determining unit 21b is now described with reference to FIG. 23. FIG. 23 is a flowchart illustrating an example of a process of determining whether an operation can be performed on the drawing screen on the electronic whiteboard according to the embodiment.

In step S80-1, the operation possibility determining unit 21 determines whether there is an operation target indicated by the operation request with reference to the operation information management DB 1003. Specifically, the operation possibility determining unit 21b reads the operation information regarding the operation 3 which is the operation target from the undo stack or the redo stack included in the operation information management DB 1003b. The operation possibility determining unit 21 then determines whether there is the operation target identified by the stroke ID or page ID indicated by the read operation information in the drawing screen 250. In this case, the operation possibility determining unit 21b refers to the state of the drawing screen 250 using the drawing screen management DB 1001b. If the operation possibility determining unit 21b determines that there is the operation target (YES in step S80-1), the process proceeds to step S80-2. On the other hand, if the operation possibility determining unit 21b determines that there is not the operation target (NO in step S80-1), the process proceeds to step S80-5. For example, the case where there is not the operation target is the case where the stroke image corresponding to the operation 3 serving as the operation target or the page in which the stroke image is drawn has been deleted by the other electronic whiteboard 1a. In the case of the process illustrated in FIG. 21, the stroke image corresponding to the operation 3 is just moved by the other electronic whiteboard 1a and thus remains in the drawing screen 250. Therefore, the operation possibility determining unit 21b determines that there is the operation target.

In step S80-2, the operation possibility determining unit 21b determines whether the operation target indicated by the operation request has been edited with reference to the operation information management DB 1003b. Specifically, the operation possibility determining unit 21b determines whether the stroke image corresponding to the operation 3 serving as the operation target has been edited on the basis of the content of the data indicated by the read operation information and the state of the drawing screen 250 stored in the drawing screen management DB 1001b. If the operation possibility determining unit 21b determines that the operation target has not been edited (NO in step S80-2), the process proceeds to step S80-3. On the other hand, if the operation possibility determining unit 21b determines that the operation target has been edited (YES in step S80-2), the process proceeds to step S80-5. For example, the case where the operation target has been edited is the case where an operation such as movement is performed by the other electronic whiteboard 1a on the stroke image corresponding to the operation 3 serving as the operation target or on the page in which the stroke image is drawn. In the case of the process illustrated in FIG. 21, the stroke image corresponding to the operation 3 is moved by the other electronic whiteboard 1a. Thus, the operation possibility determining unit 21b determines that the operation target has been edited.

In step S80-3, the operation possibility determining unit 21b determines whether there is a page to which the stroke serving as the operation target indicated by the operation request is to be added, with reference to the operation information management DB 1003b. Specifically, the operation possibility determining unit 21b determines whether there is the page corresponding to the page ID indicated by the read operation information in the drawing screen 250 with reference to the drawing screen management DB 1001b. If the operation possibility determining unit 21b determines that there is the page to which the stroke serving as the operation target is to be added (YES in step S80-3), the process proceeds to step S80-4. On the other hand, if the operation possibility determining unit 21b determines that there is not the page to which the stroke serving as the operation target is to be added (NO in step S80-3), the process proceeds to step S80-5. For example, the case where there is not the page to which the stroke is to be added is the case where the page in which the stroke image corresponding to the operation 3 serving as the operation target has been drawn has been deleted by the other electronic whiteboard 1a. The processing of step S80-3 is performed to add a stroke to a drawing screen by the undo process for an operation such as deletion of the stroke. If addition of a stroke does not occur by the undo process, the processing of step S80-3 may be skipped.

In step S80-4, the operation possibility determining unit 21b determines that the operation indicated by the operation request can be performed (executable). On the other hand, if the operation possibility determining unit 21b determines that there is not the operation target in step S80-1, determines that the operation target has been edited by the processing of step S80-2, or determines that there is not the page to which the stroke serving as the operation target is to be added in the processing of step S80-3, the operation possibility determining unit 21b determines that the operation indicated by the operation request cannot be performed (denied) in step S80-5. In step S80-6, the image processing unit 16b generates a message indicating a reason why the operation is denied by the operation possibility determining unit 21b. Specifically, the image processing unit 16b generates a message indicating content of processing (processing of step S80-1, processing of step S80-2, or processing of step S80-3) indicating the reason why the operation is denied.

As described above, the electronic whiteboard 1b can determine whether an operation (undo or redo operation) indicated by the operation request can be performed, based on the operation information stored in the undo stack or redo stack and the state of the drawing screen 250 displayed on the display 180.

Referring back to FIG. 21, in step S81, the image processing unit 16b of the electronic whiteboard 1b generates drawing screen data of a drawing screen to be displayed on the display 180, based on the result determined by the operation possibility determining unit 21b. For example, if the operation possibility determining unit 21b determines that the operation indicated by the operation request can be performed, the image processing unit 16b generates drawing screen data of a drawing screen on which the operation indicated by the operation request has been performed. On the other hand, if the operation possibility determining unit 21b determines that the operation indicated by the operation request cannot be performed, the image processing unit 16b generates drawing screen data of a drawing screen including the message generated in step S80-6.

In step S82, the display control unit 14b controls the display 180 to display the drawing screen based on the drawing screen data generated by the image processing unit 16b. For example, if the operation possibility determining unit 21b determines that the operation indicated by the operation request can be performed, the display control unit 14b controls the display 180 to display the drawing screen that is based on the drawing screen data generated by the image processing unit 16b and in which the operation indicated by the operation request has been performed. On the other hand, if the operation possibility determining unit 21b determines that the operation indicated by the operation request cannot be performed, the display control unit 14b controls the display 180 to display the drawing screen that is based on the drawing screen data generated by the image processing unit 16b and that includes the message generated in step S80-6.

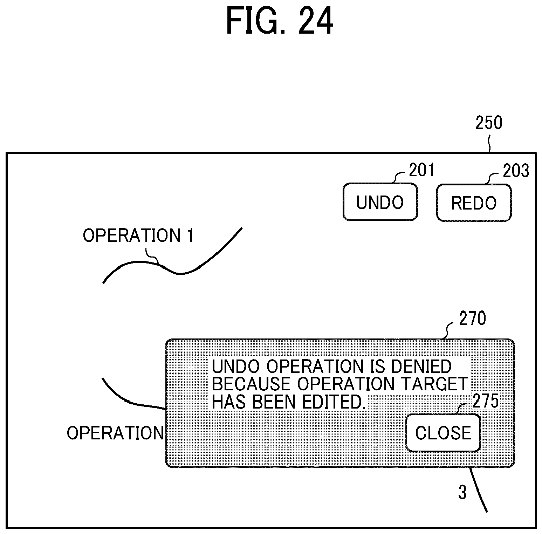

The drawing screen displayed on the display 180 in the case of the process illustrated in FIG. 21 is now described. FIG. 24 is an illustration of an example of an operation denial image displayed on the electronic whiteboard according to the embodiment. An operation denial image 270 illustrated in FIG. 24 is displayed to be superimposed on the drawing screen 250 displayed on the display 180 in step S78. The operation denial image 270 corresponds to the message generated in step S80-6. The operation denial image 270 includes a message regarding a reason why it is determined that the operation cannot be performed by the operation possibility determining unit 21b and a "Close" button 275 to be pressed to delete (close) the operation denial image 270.

The operation possibility determining unit 21b determines that the operation cannot be performed because the operation target has been edited. Thus, in the example illustrated in FIG. 24, the operation denial image 270 presents a message "The undo operation is denied because the operation target has been edited". For example, if the operation possibility determining unit 21b determines that the operation cannot be performed because there is not the operation target, the operation denial image 270 presents a message "The undo operation is denied because the operation target is not present". For example, if the operation possibility determining unit 21b determines that the operation cannot be performed because there is not the page to which a stroke that is the operation target is to be added, the operation denial image 270 presents a message "The undo operation is denied because the page to which the stroke is to be added is not present". As described above, the operation denial image 270 presents a message indicating content of processing (processing of step S80-1, processing of step S80-2, or processing of step S80-3) indicating the reason why the operation is denied. Consequently, if it is determined that the undo operation or redo operation cannot be performed, the electronic whiteboard 1b notifies the user of the reason why the operation is denied. Thus, the electronic whiteboard 1b can improve the convenience of the user.

Note that the expression or display manner of the message included in the operation denial image 270 is not limited to this example. FIG. 21 describes the example case in which the undo operation request is accepted in step S79. However, if the operation request for the redo process is accepted in step S79, the electronic whiteboard 1b also performs the process of determining whether the operation can be performed as illustrated in FIG. 23 and causes the display 180 to display the drawing screen corresponding to the determined result. Further, each of the drawing screens 200, 210, 230, and 250 described above is an example of a display screen displayed on the display 180.

In the case where a drawing screen that is displayed is shared among a plurality of electronic whiteboards, if a stroke image input by a user of one of the electronic whiteboards is deleted by a user of another electronic whiteboard and then the user who has input the stroke image requests an undo operation, nothing occurs on the display screen in the related art. This is because the stroke image which is an operation target is deleted by the other electronic whiteboard. However, the cause of the phenomenon is unknown to the user who has requested the undo operation.

In contrast, in the communication system according to the embodiment, if an operation request for an undo operation or redo operation is accepted from the user B1 of the electronic whiteboard 1b, it is determined whether the undo operation or redo operation can be performed. If it is determined that the undo operation or redo operation cannot be performed, a message indicating so and the reason thereof are presented to the user B1. In this manner, the communication system according to the embodiment can improve the convenience when the undo operation or redo operation is performed on the drawing screen displayed on the display 180 in a shared manner between the plurality of electronic whiteboards 1a and 1b.

As described above, the electronic whiteboard 1b according to one embodiment of the present invention is a communication terminal that shares data with another communication terminal (for example, the electronic whiteboard 1a). The electronic whiteboard 1b receives, from the communication management device 5 that manages the data shared with the other communication terminal, drawing screen data (an example of display screen data) of a drawing screen (an example of a display screen) displayed on the other communication terminal. The electronic whiteboard 1b controls the display 180 (an example of a display) to display a drawing screen based on the received drawing screen data. The electronic whiteboard 1b stores operation information regarding an operation that has been performed on an image (for example, a stroke image) included in the drawing screen displayed on the display 180. The electronic whiteboard 1b accepts an operation request for a specific operation to be performed on the image included in the drawing screen, and determines whether the specific operation indicated by the accepted operation request can be performed based on the stored operation information. If the electronic whiteboard 1b determines that the specific operation cannot be performed, the electronic whiteboard 1b controls the display 180 to display the operation denial image 270 (an example of a message) indicating that the specific operation cannot be performed. In this manner, the electronic whiteboard 1b can improve the convenience of the user when a specific operation is performed on a drawing screen displayed in a shared manner on the electronic whiteboards 1a and 1b.

The electronic whiteboard 1b (an example of a communication terminal) according to one embodiment of the present invention accepts an operation request (for example, an undo operation request) for performing an undo operation for cancelling a last operation performed on an image (for example, a stroke image) included in the drawing screen, and determines whether the undo operation indicated by the accepted operation request can be performed. If the electronic whiteboard 1b determines that the undo operation cannot be performed, the electronic whiteboard 1b controls the display 180 to display the operation denial image 270 (an example of a message) indicating that the undo operation cannot be performed. Consequently, if it is determined that the undo operation cannot be performed, the electronic whiteboard 1b notifies the user of the reason why the undo operation cannot be performed. In this manner, the electronic whiteboard 1b can improve the convenience when an undo operation is performed on a drawing screen displayed in a shared manner on the electronic whiteboards 1a and 1b.

The electronic whiteboard 1b (an example of a communication terminal) according to one embodiment of the present invention accepts an operation request (for example, a redo operation request) for performing a redo operation for restoring an operation cancelled in response to an operation for canceling a last operation performed on an image (for example, a stroke image) in the drawing screen, and determines whether the redo operation indicated by the accepted operation request can be performed. If the electronic whiteboard 1b determines that the redo operation cannot be performed, the electronic whiteboard 1b controls the display 180 to display the operation denial image 270 (an example of a message) indicating that the redo operation cannot be performed. Consequently, if it is determined that the redo operation cannot be performed, the electronic whiteboard 1b notifies the user of the reason why the redo operation cannot be performed. In this manner, the electronic whiteboard 1b can improve the convenience when a redo operation is performed on a drawing screen displayed in a shared manner on the electronic whiteboards 1a and 1b.

The electronic whiteboard 1b (an example of a communication terminal) according to an embodiment of the present invention stores operation information regarding an operation performed on an image (for example, a stroke image) included in a drawing screen, in an undo stack configured to store information regarding an operation for which the undo process can be performed or in a redo stack configured to store information regarding an operation for which the redo process is can performed. As described above, the electronic whiteboard 1b stores operation information regarding an operation performed on a display screen in the undo stack and the redo stack. In this manner, the electronic whiteboard 1b can perform the undo process and the redo process on the drawing screen.

### Supplementary Information on Embodiments

Each of the functions described in the embodiments above may be implemented by one or more processing circuits. The term "processing circuit" used herein refers to a processor that is programmed to carry out each function by software such as a processor implemented by an electronic circuit, or a device such as an application specific integrated circuit (ASIC), digital signal processor (DSP), field programmable gate array (FPGA) that is designed to carry out each function described above, or a conventional circuit module.

The various tables according to the embodiment described above may be generated as a learning effect of machine learning. Alternatively, the associated pieces of data in the respective fields of the tables may be categorized through machine learning to omit the use of the tables. Machine learning is a technique allowing a computer to obtain a learning ability such as that of a person and is a technique allowing the computer to autonomously generate an algorithm used for determination such as data classification from training data that is obtained in advance and to apply the algorithm to new data to perform prediction. The machine learning method may be any of supervised learning, unsupervised learning, semi-supervised learning, reinforcement learning, and deep learning, or any combination of these. That is, any machine learning method may be used.

While the communication terminal, the communication system, the display control method, and the carrier medium according to one embodiment of the present invention have been described above, the present invention is not limited to the embodiment described above. Modifications such as addition of another embodiment, or alteration or deletion of the configuration may be made within the scope that can be conceived by a person skilled in the art, and each embodiment is within the scope of the present invention as long as the embodiment provides the operations and advantageous effects of the present invention.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a TCP/IP signal carrying computer code over an IP network, such as the Internet. The carrier medium may also include a storage medium for storing processor readable code such as a floppy disk, hard disk, CD ROM, magnetic tape device or solid state memory device.

## Claims

1. A communication terminal (1b) configured to share data with another communication terminal (1a), the communication terminal (1b) comprising:
receiving means (11) for receiving display screen data from a communication management device (5), the communication management device (5) being configured to manage the data shared between the communication terminal (1b) and the another communication terminal (1a), the display screen data being data of a display screen displayed on the another communication terminal (1a);
display control means (14) for controlling a display (180) to display a display screen based on the received display screen data;
storage means (1003) for storing operation information regarding an operation performed on an image included in the display screen displayed on the display;
accepting means (12) for accepting an operation request for requesting a specific operation to be performed on the image; and
determining means (21) for determining whether the specific operation indicated by the operation request can be performed, based on the stored operation information,
wherein when the determining means (21) determines that the specific operation cannot be performed on the image, the display control means (14) controls the display (180) to display a message indicating that the specific operation cannot be performed.

2. The communication terminal (1b) according to Claim 1, wherein
the specific operation is an operation for cancelling a last operation performed on the image.

3. The communication terminal (1b) according to Claim 1, wherein
the specific operation is an operation for performing an operation cancelled by an operation for cancelling a last operation performed on the image.

4. The communication terminal (1b) according to Claim 2 or 3, wherein
the specific operation is an operation for performing an undo process or a redo process on the display screen.

5. The communication terminal (1b) according to Claim 4, wherein
the storage means (1003) stores the operation information in an undo stack or a redo stack, the undo stack being configured to store an operation for which the undo process can be performed, the redo stack being configured to store an operation for which the redo process can be performed.

6. The communication terminal (1b) according to any one of Claims 1 to 5, wherein
when an image as a target of the specific operation is not present, the determining means (21) determines that the specific operation cannot be performed.

7. The communication terminal (1b) according to any one of Claims 1 to 6, wherein
when a target of the specific operation has been edited, the determining means (21) determines that the specific operation cannot be performed.

8. The communication terminal (1b) according to any one of Claims 1 to 7, wherein
when the determining means (21) determines that the specific operation can be performed on the image, the display control means (14) controls the display (180) to display a display screen on which the specific operation has been performed.

9. The communication terminal (1b) according to any one of Claims 1 to 8, wherein
the receiving means (11) is configured to receive the display screen data from the communication management device (5), the display screen data including stroke data of a stroke image drawn on the another communication terminal (1a), and
the accepting means (12) is configured to accept the operation request for the stroke image.

10. The communication terminal (1b) according to Claim 9, wherein
the display screen includes a plurality of pages including the stroke image, and
the determining means (21) is configured to determine that the specific operation cannot be performed when a page is not present to which the stroke image as a target of the specific operation can be added.

11. A communication system comprising:
the communication terminal (1b) according to any one of Claims 1 to 10; and
the communication management device (5).

12. A display control method performed by a communication terminal (1b) configured to share data with another communication terminal (1a), the display control method comprising:
receiving (S56, S76) display screen data from a communication management device (5), the communication management device (5) being configured to manage the data shared between the communication terminal (1b) and the another communication terminal (1a), the display screen data being data of a display screen displayed on the another communication terminal (1b);
controlling (S58, S78) a display (180) to display a display screen based on the received display screen data;
accepting (S71, S79) an operation request for requesting a specific operation to be performed on an image included in the display screen displayed on the display (180);
determining (S80) whether the specific operation indicated by the operation request can be performed, based on operation information stored in storage means (1003), the operation information being information regarding an operation performed on the image; and
controlling (S80-6, S82), based on determination that the specific operation cannot be performed on the image, the display (180) to display a message indicating that the specific operation cannot be performed.

13. A carrier medium carrying computer readable code for controlling a computer to carry out the method of Claim 12.
